# EUROPEAN PATENT SPECIFICATION

(11) **EP 3 961 770 B1**
(45) Date of publication and mention of the grant of the patent: **25.10.2023**
(21) Application number: 21774396.2
(22) Date of filing: 27.03.2021
(51) Int. Cl.: H01M 4/587, H01M 4/1393, H01M 4/133, H01M 10/0525, C01B 32/205

(54) **SECONDARY BATTERY AND BATTERY MODULE, BATTERY PACK AND APPARATUS CONTAINING THE SAME**
SEKUNDÄRBATTERIE UND BATTERIEMODUL, BATTERIEBLOCK UND DIESE ENTHALTENDE VORRICHTUNG
BATTERIE SECONDAIRE ET MODULE DE BATTERIE, BLOC-BATTERIE ET DISPOSITIF LE CONTENANT

(30) Priority: 27.03.2020 WO PCT/CN2020/081700
(43) Date of publication of application: 02.03.2022
(60) Divisional application: 23195533.7
(73) Proprietor: Contemporary Amperex Technology Co., Limited, Jiaocheng District Ningde City Fujian 352100 (CN)
(72) Inventor: MA, Jianjun, Fujian 352100 (CN); HE, Libing, Fujian 352100 (CN); SHEN, Rui, Fujian 352100 (CN)
(74) Representative: Boult Wade Tennant LLP
(86) International application number: PCT/CN2021/083463
(87) International publication number: WO 2021/190650

(56) References cited:
- EP-A1- 3 561 922
- WO-A1-2014/142285
- CN-A- 1 771 617
- CN-A- 104 810 508
- CN-A- 108 483 437
- CN-A- 109 449 446
- CN-A- 110 642 247
- KR-A- 20130 124 226

## Description

### TECHNICAL FIELD

The present application belongs to the technical field of secondary battery, and particularly, relates to a secondary battery and a battery module, pack and apparatus containing the secondary battery.

### BACKGROUND

Secondary batteries have the advantages of reliable working performance, non-pollution, no memory effect, etc., thus are widely used. For example, with the increasing attention to environmental protection issues and the increasing popularity of new energy vehicles, the demand for power secondary batteries will show its boom. Nevertheless, as the application range of secondary batteries becomes wider and wider, severe challenges would be confronted to the performance of secondary batteries. In order to improve the user experience, the secondary battery should have various performances such as dynamic performance, and at the same time have cycle life. The problem existed in the prior art is that when the dynamic performance of the batter is improved, it is usually difficult to simultaneously obtain cycle performance at high temperature of the battery.

WO2014/142285 discloses a secondary battery, including a positive plate, including a positive current collector and a positive film arranged on at least one surface of the positive current collector and including a positive active material, the positive active material comprising one or more of layered lithium transition metal oxides and the modified compounds thereof; and a negative plate, including a negative current collector and a negative electrode film arranged on at least one surface of the negative current collector and including a negative active material, the negative active material comprising a first material and a second material, wherein the first material includes an artificial graphite and the second material includes a natural graphite (50 Vol %).

### SUMMARY

The present application is developed in view of the above technical problems, whose purpose is to provide a secondary battery that has improved dynamic performance and simultaneously has better cycle performance at high temperature and safety performance.

For the above purpose, the present application is set out in the appended claims. The inventors of the present application after intensive research found that, when the positive active material comprises one or more of layered lithium transition metal oxides and the modified compounds thereof, when the negative active material of the negative electrode film of the secondary battery comprises a artificial graphite and a natural graphite, wherein the artificial graphite includes primary particles and secondary particles, and a number percentage S of the secondary particles in the negative active materials is set in specific range, the secondary battery could have improved dynamic performance , and simultaneously have cycle performance at high temperature. In any embodiment, the number percentage S of the secondary particles in the negative active material may optionally satisfy: 10%≤S≤30%, and more optionally 15%≤S≤30%. By setting the number percentage S of the secondary particles in the negative active material within the above range, the dynamic performance and cycle performance at high temperature of the battery can be further improved.

In any embodiment, the volume average particle size Dᵥ50 of the negative active material is less than or equal to 14.0µm; optionally, the volume average particle size Dᵥ50 of the negative active material is from 8.0 µm to 12.0µm; optionally, the volume average particle size Dᵥ50 of the negative active material is from 12.0 µm to 14.0µm. When the volume average particle size Dᵥ50 of the negative active material falls within the above range, the safety performance of the battery may be further improved.

In order to make the volume average particle size Dᵥ50 of the negative active material fall within the above range, the volume average particle size Dᵥ50 of the artificial graphite may be from 10.0 µm to 14.5 µm, optionally may be from 11.0 µm to 13.5 µm; and/or, the volume average particle size Dᵥ50 of the natural graphite may be from 7.0 µm to 14.0 µm, and optionally may be from 7.0 µm to 13.0 µm.

In any embodiment, the volume particle size distribution Dᵥ90 of the negative active material may be from 16.0 µm to 25.0 µm, and optionally may be from 20.0 µm to 25.0 µm. When the volume average particle size Dᵥ90 of the negative active material falls within the above range, the battery can simultaneously have better dynamic performance, cycle performance at high temperature and safety performance.

In order to make the volume particle size distribution Dᵥ90 of the negative active material fall within the above range, the volume particle size distribution Dᵥ90 of the artificial graphite may be from 23.0 µm to 30.0 µm, optionally may be from 25.0 µm to 29.0 µm; and/or, the volume particle size distribution Dᵥ90 of the natural graphite may be from 15.0 µm to 23.0 µm, and optionally may be from 18.0 µm to 21.0 µm.

In any embodiment, the volume particle size distribution Dᵥ99 of the negative active material may be from 25.0 µm to 37.0 µm, and optionally may be from 33.0 µm to 36.5 µm. When the volume average particle size Dᵥ99 of the negative active material falls within the above range, the battery can simultaneously have better dynamic performance, cycle performance at high temperature and safety performance.

In order to make the volume particle size distribution Dᵥ99 of the negative active material fall within the above range, the volume particle size distribution Dᵥ99 of the artificial graphite may be from 30.0µm to 45.0µm, optionally may be from 32.0µm to 43.0µm; and/or, the volume particle size distribution Dᵥ99 of the natural graphite may be from 21.0µm to 35.0µm, optionally may be from 25.0µm to 30.0µm.

In any embodiment, the particle size distribution (Dᵥ90-Dᵥ10)/Dᵥ50 of the negative active material may be from 1.30 to 1.55, and optionally may be from 1.35 to 1.50. When the particle size distribution (Dᵥ90-Dᵥ10)/Dᵥ50 of the negative active material falls within the above range, the battery can simultaneously have better dynamic performance, cycle performance at high temperature and safety performance.

In order to make the particle size distribution (Dᵥ90-Dᵥ10)/Dᵥ50 of the negative active material fall within the above range, the particle size distribution (Dᵥ90-Dᵥ10)/Dᵥ50 of the artificial graphite may be from 1.25 to 1.95, optionally may be from 1.35 to 1.80; and/or, the particle size distribution (Dᵥ90-Dᵥ10)/Dᵥ50 of the natural graphite may be from 0.88 to 1.28, optionally may be from 0.98 to 1.18.

In any embodiment, the number percentage of the secondary particles in the artificial graphite may be from 25% to 60%, and optionally may be from 30% to 50%. When the number percentage of the secondary particles in the artificial graphite falls within the above range, the expansion rate of the plate can be further reduced.

In any embodiment, the tap density of the negative active material may satisfy ≥1.10 g/cm³, and optionally may be from 1.10 g/cm³ to1.15 g/cm³. When the tap density of the negative active material falls within the above range, the energy density and dynamic performance of the battery can be further improved.

In any embodiment, the tap density of the artificial graphite may be from 0.90g/cm³ to 1.20g/cm³, optionally may be from 1.15g/cm³ to 1.15g/cm³; and/or the tap density of the natural graphite may be from 0.90 g/cm³ to 1.18g/cm³, and optional may be from 0.93g/cm³ to 1.13g/cm³.

In any embodiment, the graphitization degree of the negative active material may be from 92% to 96%, and optionally may be from 93% to 95%. When the graphitization degree of the negative active material falls within the above range, the energy density of the battery can be further increased and the expansion rate of the plate can be reduced.

In order to make the graphitization degree of the negative active material fall within the above range, the graphitization degree of the artificial graphite may be from 90% to 95%, optionally may be from 93% to 95%; and/or, the graphitization degree of the natural graphite may be from 95% to 98%, and optionally may be from 95% to 97%.

In any embodiment, the natural graphite has a coating layer on its surface. By forming a coating layer on the surface of the natural graphite, the surface activity of the natural graphite can be reduced, thereby further improving the cycle performance at high temperature of the battery.

In any embodiment, the mass percentage of the natural graphite in the negative active material may satisfy ≤30%, optionally from 15% to 25%. When the mass percentage of the natural graphite in the negative active material falls within the above range, it would attain higher energy density of the battery and significantly reduce side reactions during the battery cycle, thereby further improving the cycle performance at high temperature and safety performance of the battery.

In any embodiment, the compaction density of the negative electrode film may be from 1.60 g/cm³ to 1.80 g/cm³, and optionally may be from 1.65 g/cm³ to 1.75 g/cm³. When the compaction density of the negative electrode film falls within the above range, the dynamic performance and energy density of the battery can be further improved.

In any embodiment, the areal density of the negative electrode film may be from 10.0 mg/cm² to 13.0 mg/cm², and optionally may be from 10.5 mg/cm² to 11.5 mg/cm². When the areal density of the negative electrode film falls within the above range, the dynamic performance of the battery and the cycle performance of the battery can be further improved.

In any embodiment, the cohesion force F of the negative electrode film may satisfy: 220N/m≤F≤300N/m, optionally 240N/m≤F≤260N/m. When the cohesion force of the negative electrode film falls within the above range, the negative electrode film could have higher active ions and electrons transportation performance, and at the same time, it could have reduced cycle expansion rate of the electrode plate and reduced the amount of binder added in the negative electrode film.

In any embodiment, the positive active material may comprise a layered lithium transition metal oxide having a general formula LiₐNi_{b}Co_{c}M_{d}M'ₑO_{f}A_{g}, wherein 0.8≤a≤1.2, 0.6≤b<1, 0<c<1, 0<d< 1, 0≤e≤0.1, 1≤f≤2, and 0≤g≤1; M is one or more selected from the group consisting of Mn and Al; M' is one or more selected from Zr, Mn, Al, Zn, Cu, Cr, Mg, Fe, V, Ti and B; and A is one or more selected from N, F, S and Cl; and optionally, 0.65allyCu, en the above-mentioned materials are used as the positive active material, the improvement in the safety performance of the battery is more significant.

In view of this, the battery module, battery pack and apparatus at least have advantages identical to the above-mentioned secondary battery.

### DESCRIPTION OF THE DRAWINGS

In order to illustrate the technical solutions of the embodiments according to the present application more clearly, hereinbelow, the drawings mentioned in the embodiments according to the present application will be briefly described. Apparently, the drawings as described below are only some of the embodiments according to the present application. For those of ordinary skill in the art, other drawings can be obtained based on the accompanied drawings, without paying any inventive labor.

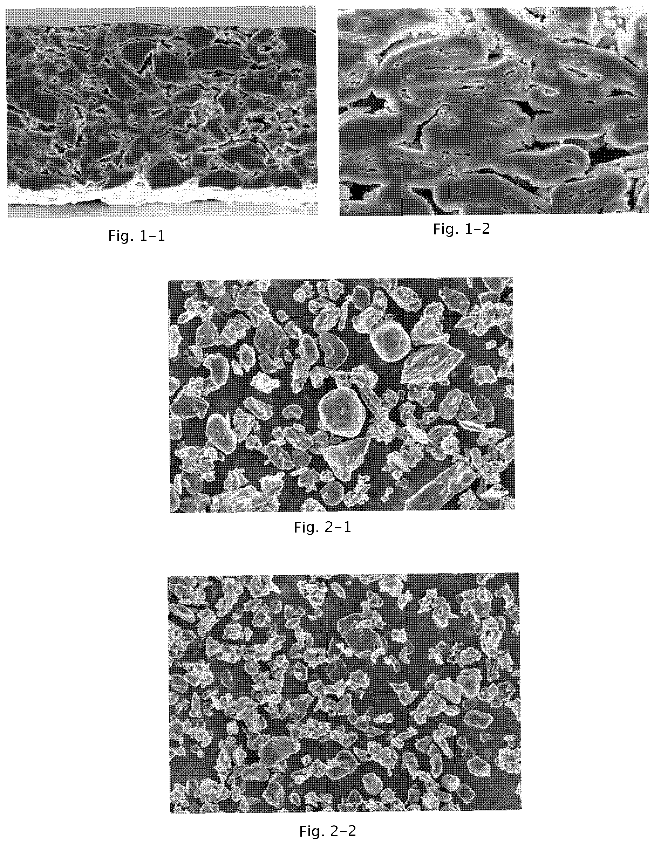

Fig. 1-1 is a cross-section image of the ion polishing morphology (CP) of the artificial graphite according to one embodiment of the present application.
Fig. 1-2 is a cross-section image of the ion polishing morphology (CP) of the natural graphite according to one embodiment of the present application.
Fig. 2-1 is a scanning electron microscope (SEM) image of the negative active material in the negative electrode film according to one embodiment of the present application.
2-2 is a scanning electron microscope (SEM) image of the negative active material in the negative electrode film according to another embodiment of the present application.
Fig. 3 is a schematic view of a secondary battery according to one embodiment.
Fig. 4 is an exploded view of Fig. 3.
Fig. 5 is a schematic view of a battery module according to one embodiment.
Fig. 6 is a schematic view of a battery pack according to one embodiment.
Fig. 7 is an exploded view of Fig. 6.
Fig. 8 is a schematic view of an apparatus wherein a secondary battery is used as a power source according to one embodiment.

### DETAILED DESCRIPTION

In order to make the purpose of the invention, technical solutions, and beneficial technical effects according to the present application more clear, hereinbelow, the present application will be further described in detail with reference to examples. It should be understood that the examples described in the present description are only intended to explain the application, but not to limit the application.

For simplicity, only some numerical ranges are explicitly disclosed herein. Nevertheless, any lower limit may be combined with any upper limit to form an unspecified range. Moreover, any lower limit may be combined with other lower limits to form an unspecified range; likewise, any upper limit may be combined with any other upper limit to form an unspecified range. In addition, in spite of explicit recitation, each point or single value between the end points of a range is included in the range.

Therefore, each point or single value, as the lower limit or upper limit thereof, may be combined with any other point or single value, or with other lower limit or upper limit, to form an unspecified range.

In the description herein, it should be noted that, unless otherwise specified, "above" and "below" means including the number itself, and "more" in "one or more" means two or more.

The above-mentioned summary of the invention in this application is not intended to describe each embodiment as disclosed or each implementation in this application. Hereinbelow, exemplified embodiments will be described more specifically. The present application, in many places throughout the text, provides guidance through a series of embodiments which may be combined in various ways. In each example, the listing should only be considered as a representative group, rather than being construed as an exhaustive list.

### Secondary battery

The first aspect according to the present application provides a process for preparing the secondary battery (5) including a positive plate, including a positive current collector and a positive film arranged on at least one surface of the positive current collector and including a positive active material, the positive active material comprising one or more of layered lithium transition metal oxides and the modified compounds thereof; and a negative plate, including a negative current collector and a negative electrode film arranged on at least one surface of the negative current collector and including a negative active material,

the process including preparing the negative active material by
(1) taking a non-needle-like petroleum coke as a raw material, smashing the raw material and removing fine powder; placing the raw material into a reacting kettle for heating, shaping, and removing fine powder, so as to obtain an intermediate product 1; graphitizing the intermediate product 1 at a high temperature, so as to obtain an intermediate product 2; and mixing intermediate product 2 in a mixer and then sieving, so as to obtain an artificial graphite A;
(2) taking a needle-like green petroleum coke as a raw material, smashing the raw material and removing fine powder; and graphitizing the raw material at high temperature and sieving, so as to obtain an artificial graphite B;
(3) mixing the artificial graphite A and the artificial graphite B to obtain an artificial graphite;
(4) taking flake graphite as a raw material, smashing and spheroidizing the raw material, so as to obtain an intermediate 1; chemically purifying the intermediate 1 to obtain an intermediate 2; drying the intermediate 2 and mixing it with pitch for carbonization treatment, and then sieving, so as to obtain a natural graphite; and
(5) mixing the artificial graphite and the natural graphite to obtain the negative active material,
wherein the negative active material comprises the artificial graphite and the natural graphite, and wherein the artificial graphite includes primary particles and secondary particles, and a number percentage S of the secondary particles in the negative active material satisfies: 10% ≤ S ≤ 50%.

A secondary battery usually includes a positive plate, a negative plate, a separator, and an electrolyte. During the charging and discharging process of the battery, active ions repeatedly intercalate into and deintercalate out of the positive plate or the negative plate. The separator, arranged between the positive plate and the negative plate, can insulate electrons to prevent internal short circuits, and enable active ions to penetrate and move between the positive and negative electrodes. The electrolyte has a function of transferring ions between the positive plate and the negative plate.

### [Negative plate]

The negative plate according to the present application includes a negative current collector and a negative electrode film arranged on at least one surface of the negative current collector. The negative electrode film includes a negative active material. The negative active material comprises a first material and a second material, wherein the first material includes artificial graphite and the second material includes natural graphite. The artificial graphite includes primary particles and secondary particles, wherein the number percentage S of the secondary particles in the negative active material satisfies: 10% ≤ S ≤ 50%.

In some embodiments, the number percentage S of the secondary particles in the negative active material may fall within the numerical range with the end points being selected from any two of values listed as follows: 10%, 13%, 15% , 17%, 20%, 23%, 25%, 30%, 33%, 35%, 40%, 42%, 45%, 48%, 50%. For example, S may satisfy: 15%≤S≤50%, 20%≤S≤48%, 25%≤S≤50%, 30%≤S≤50%, 10%≤S≤30%, 15%≤S ≤30%, and 20%≤S≤45%.

The inventor of the present application after intensive research found that, when the negative active material of the negative electrode film includes artificial graphite and natural graphite, and the artificial graphite includes primary particles and secondary particles, and when the number percentage of secondary particles in the negative active material falls within a specific range, the negative plate can have reduced cyclic expansion during the charge and discharge process, and at the same time can have higher reversible capacity and higher active ion transportation performance, thereby effectively improving the high temperature cycle performance and dynamic performance of the secondary battery.

The inventor found that, when S is lower than 10%, the contact between the active material particles in the plate are mainly in point contacts, and thus the cohesion between the active material particles is relatively low. As a result, during the cycle of the battery, the active material particles would likely separate to lose electrical contact. This would result in a decreased potential of the negative electrode, thereby affecting the cycle performance at high-temperature of the battery. When S exceeds 50%, the contact area between the active material particles and the current collector is insufficient, and thus the film and the current collector are likely to separate during the battery cycle; this would affect the electron transmission path and further fade the capacity rapidly, thereby affecting the cycle performance at high-temperature of the battery. Moreover, when S exceeds 50%, the lithium-intercalation potential in the active material particles would be much higher, thus the side reactions will become intense under high temperature; this would increase the polarization of the battery, increase the accumulation of the side-products, and render the plate partially precipitate lithium, thereby affecting the dynamic performance.

It should be noted that the primary particles and the secondary particles in the negative active material both have a well-known meaning in the art. Primary particles refer to particles in a non-agglomerated state. Secondary particles refer to the agglomerated particles formed by the aggregation of two or more primary particles. Primary particles and secondary particles can be distinguished by using scanning electron microscope (SEM) images.

The number percentage of secondary particles in the negative active material S means: taking a test sample randomly from the negative electrode film, taking multiple test areas on the test sample, and obtaining the images of the multiple test areas by means of scanning electron microscope SEM, and calculating the ratio of the number of negative active material particles having secondary particle morphology to the total number of the negative active material, wherein the average of multiple calculated results is the number percentage of secondary particles in the negative active material.

Artificial graphite usually refers to graphite materials obtained through graphitization treatment under high temperature, and it has high graphitization and crystallization degree. Generally, the crystal lattice structure of artificial graphite tends to long-range orderly layered arrangement, the lattice arrangement of which may be observed by means of transmission electron microscope (TEM).

Natural graphite usually refers to the graphite formed naturally in nature and does not need to be graphitized. Graphite material may be obtained by subjecting the flake graphite to spheroidizing and purifying process. Natural graphite particle usually has many closed-pore structures therein.

Artificial graphite and natural graphite may be distinguished by a test conducted on cross-section ion polisher. According to some embodiments, the material type may be observed by preparing the negative active into a negative plate and subjecting the negative plate to the ion polished cross-sectional morphology (CP) test. As an example, the test method may be: preparing the artificial graphite into a negative plate, cutting the prepared negative plate into a tested sample having a certain size (for example, 2cmx2cm), and fixing the negative plate on the sample table with paraffin wax; afterwards, installing the sample stage onto a sample rack and locking it to fix; turning on the power of the cross-section argon ion polisher (for example IB-19500CP) and vacuumizing (for example to 10⁻⁴Pa); setting the argon flow (for example as 0.15MPa), voltage (for example as 8KV) and polishing time (for example as 2 hours); and adjusting the sample stage to swing mode to start polishing. Sample test may refer to JY/T010-1996. Scanning test may be conducted on the areas of randomly selected samples, and the cross-sectional ion polished (CP) morphology image of the negative plate may be obtained at certain magnification (for example, 1000 times). For example, Fig. 1-1 is an example of the artificial graphite according to the present application. It can be seen from Fig. 1-1 that the material particles are compact and have less pores inside. Fig. 1-2 is an example of the natural graphite according to the present application. As compared with Fig. 1-1, the material particles of Fig. 1-2 have more pores inside, most of which have closed-pore structure.

The particle morphology of the negative active material and the number percentage of the secondary particles may be tested by methods well-known in the art. For example, it comprises laying and gluing the negative active material on the conductive glue (the negative active material is sampled from the negative electrode film) to make a test sample of length × width = 6 cm × 1.1 cm. Test the morphology of the particles in the test sample by means of scanning electron microscope & energy spectrometer (such as ZEISS SEM (sigma300)). The test may refer to JY/T010-1996. In order to ensure the accuracy of the test results, the test may be conducted as follows: randomly selecting multiple (for example, 10 or 20) different areas on the tested sample, calculating the number of the secondary particles and the total number of particles in the test area at certain magnification (for example, 500 times or 1000 times), wherein the ratio of the number of secondary particles to the total number of particles in any test area is the number percentage of the secondary particles in the area, and the average of the test results of 10 test areas is taken as the number percentage of the secondary particles. In order to ensure the accuracy of the results, multiple test samples (for example, 5 or 10) may prepared to repeat the above test, wherein the average of the test results of each test sample is taken as the number percentage of the secondary particles in the negative active material. For example, Figs. 2-1 and 2-2 are scanning electron microscope (SEM) images of the negative active material in the negative electrode film according to specific embodiments of the present application. It can be seen from Figs. 2-1 and 2-2 that the negative active material includes artificial graphite and natural graphite, and the artificial graphite includes primary particles and secondary particles. The number percentage of secondary particles in the negative active material can be calculated from the SEM image.

S is related to the intrinsic parameters of the active material and the formulation design of the plate. Those skilled in the art, by adjusting the above parameters, could obtain the number percentage of the secondary particles according to the present application. For example, when the type of artificial graphite and natural graphite are set (that is, specific artificial graphite and natural graphite are selected), S may be adjusted by changing the mixing ratio of artificial graphite to natural graphite and the preparation process of the plate (such as the compaction density of the plate). When the mixing ratio of artificial graphite to natural graphite is set, S may be adjusted by changing the preparation process of artificial graphite and/or natural graphite (such as raw material type, shaping process, granulation process), the intrinsic parameters of artificial graphite (such as volume average particle size and material morphology), and the preparation process of plate (such as the compaction density of the plate).

In some embodiments, the volume average particle size Dᵥ50 of the negative active material may be from 8.0 µm to 19.0 µm. The volume average particle size Dᵥ50 of the negative active material may fall within the numerical range with the end points being selected from any two of values listed as follows: 8.0µm, 8.5µm, 8.9µm, 9.0µm, 9.2µm, 9.6µm, 10.0µm, 10.2µm, 10.5µm, 10.8µm, 11.3µm, 11.6µm, 11.9µm, 12.2µm, 12.4µm, 12.8µm, 13.2µm, 13.5µm, 14.0µm, 14.2µm, 14.5µm, 15.0µm, 15.5µm, 15.9µm, 16.0µm, 16.3µm, 16.5µm, 17.0µm, 17.5µm, 18.0µm, 18.4µm, and 19.0µm. For example, the volume average particle size Dᵥ50 of the negative active material may be from 8.0µm to 17.5µm, from 8.0µm to 15.5µm, from 8.0µm to 14.5µm, from 8.0µm to 14.0µm, from 8.0µm to 12.0µm, from 8.5µm to 13.5µm, from 8.5µm to 13.0µm, from 8.5µm to 12.5µm, from 8.5µm to 11.5µm, from 9.0µm to 18.0µm, from 9.0µm to 16.5µm, from 9.0µm to 14.2µm, from 9.0µm to 13.5µm, from 9.2µm to 14.0µm, from 10.0µm to 13.5µm, from 11.0µm to 19.0µm, from 11.0µm to 15.0µm, from 11.5µm to 18.0µm, from 12.0µm to 18.0µm, from 12.0µm to 14.0µm, from 13.0µm to 19.0µm, from 14.0µm to 18.5µm, from 15.0µm to 19.0µm , from 15.5µm to 18.0µm, and from 16.0µm to 18.0µm.

It should be noted that although the inventors lists the above values in an alternative way, it does not mean that the negative active material, having a volume average particle size Dᵥ50 falling within the numerical range with the end points being any two of values listed above, can achieve equivalent or similar performance. Regarding the preferable range of the volume average particle size Dᵥ50 of the negative active material according to the present application, it can be selected based on the specific discussion and specific experimental data herein below. Likewise, this would apply to the parameters listed below.

In order to make the volume average particle size Dᵥ50 of the negative active material fall within the above-mentioned range, in some embodiments, the volume average particle size Dᵥ50 of the artificial graphite may be from 10.0 µm to 19.0µm. The volume average particle size Dᵥ50 of artificial graphite may fall within the numerical range with the end points being selected from any two of values listed as follows: 10.0µm, 11.0µm, 12.0µm, 13.0µm, 13.5µm, 14.5µm, 15.0µm, 16.0µm, 17.0µm, 18.0µm, and 19.0µm. For example, the volume average particle size Dᵥ50 of artificial graphite may be from 10.0µm to 19.0µm, from 12.0µm to 18.0µm, from 13.0µm to 17.0µm, from 10.0µm to 14.5µm, from 11.0µm to 13.5µm, from 12.0µm to 16.0µm, from 13.0µm to 15.0µm, from 14.0µm to 18.0µm, from 15.0µm to 19.0µm, from 15.0µm to 18.0µm, and from 15.0µm to 17.0µm.

In order to make the volume average particle size Dᵥ50 of the negative active material fall within the above-mentioned range, in some embodiments, the volume average particle size Dᵥ50 of the natural graphite may be from 7.0 µm to 20.0µm. The volume average particle size Dᵥ50 of natural graphite may fall within the numerical range with the end points being selected from any two of values listed as follows: 7.0µm, 10.0µm, 11.0µm, 13.0µm, 14.0µm, 15.0µm, 16.0µm, 18.0µm, 19.0µm, and 20.0µm. For example, the volume average particle size Dᵥ50 of natural graphite may be from 7.0µm to 20.0µm, from 7.0µm to 14.0µm, from 7.0µm to 13.0µm, from 10.0µm to 19.0µm, from 10.0µm to 14.0µm, from 11.0µm to 18.0µm, from 11.0µm to 13.0µm, from 15.0µm to 20.0µm, from 15.0µm to 19.0µm, from 16.0µm to 19.0µm, and from 16.0µm to 18.0µm.

In some embodiments, the volume particle size distribution Dᵥ90 of the negative active material may be from 16.0µm to 33.0µm. The volume particle size distribution Dᵥ90 of the negative active material may fall within the numerical range with the end points being selected from any two of values listed as follows: 16.0µm, 20.0µm, 25.0µm, 26.0µm, 30.0µm, 32.0µm, and 33.0µm. For example, the volume particle size distribution Dᵥ90 of the negative active material may be from 16.0 µm to 25.0 µm, from 20.0 µm to 25.0 µm, from 25.0 µm to 32.0 µm, and from 26.0 µm to 30.0 µm.

In order to make the volume particle size distribution Dᵥ90 of the negative active material fall within the above-mentioned range, in some embodiments, the volume particle size distribution Dᵥ90 of the artificial graphite may be 23.0µm to 37.0µm. The volume particle size distribution Dᵥ90 of artificial graphite may fall within the numerical range with the end points being selected from any two of values listed as follows: 23.0µm, 25.0µm, 27.0µm, 29.0µm, 30.0µm, 33.0µm, and 37.0µm. For example, the volume particle size distribution Dᵥ90 of artificial graphite may be from 23.0µm to 30.0µm, from 25.0µm to 29.0µm, from 25.0µm to 37.0µm, and from 27.0µm to 33.0µm.

In order to make the volume particle size distribution Dᵥ90 of the negative active material fall within the above-mentioned range, in some embodiments, the volume particle size distribution Dᵥ90 of natural graphite may be from 15.0µm to 35.0µm. The volume particle size distribution Dᵥ90 of natural graphite may fall within the numerical range with the end points being selected from any two of values listed as follows: 15.0µm, 18.0µm, 21.0µm, 23.0µm, 25.0µm, 31.0µm, and 35.0µm, for example, the volume particle size distribution Dᵥ90 of natural graphite may be from 15.0µm to 23.0µm, from 18.0µm to 21.0µm, from 25.0µm to 35.0µm, and from 25.0µm to 31.0µm.

In some embodiments, the volume particle size distribution Dᵥ99 of the negative active material may be from 25.0µm to 43.0µm. The volume particle size distribution Dv99 of the negative active material may fall within the numerical range with the end points being selected from any two of values listed as follows: 25.0µm, 33.0µm, 35.0µm, 36.5m, 37.0µm, 38.0µm, 40.0µm, 42.0µm, and 43.0µm. For example, the volume particle size distribution Dᵥ99 of the negative active material may be from 25.0µm to 37.0µm, from 33.0µm to 36.5µm, from 35.0µm to 42.0µm, and from 38.0µm to 40.0µm.

In order to make the volume particle size distribution Dᵥ99 of the negative active material fall within the above-mentioned range, in some embodiments, the volume particle size distribution Dᵥ99 of the artificial graphite may be from 30.0µm-50.0µm. The volume particle size distribution Dᵥ99 of the artificial graphite may fall within the numerical range with the end points being selected from any two of values listed as follows: 30.0µm, 32.0µm, 38.0µm, 40.0µm, 43.0µm, 45.0µm, 48.0µm, and 50.0µm, for example, the volume particle size distribution Dᵥ99 of artificial graphite may be from 30.0µm to 45.0µm, from 32.0µm to 43.0µm, from 38.0µm to 50.0µm, and from 40.0µm to 48.0µm.

In order to make the volume particle size distribution Dᵥ99 of the negative active material fall within the above-mentioned range, in some embodiments, the volume particle size distribution Dᵥ99 of natural graphite may be from 21.0µm to 48.0µm. The volume particle size distribution Dᵥ99 of natural graphite may fall within the numerical range with the end points being selected from any two of values listed as follows: 21.0µm, 25.0µm, 30.0µm, 32.0µm, 35.0µm, 45.0m, and 48.0µm, for example, the volume particle size distribution Dᵥ99 of natural graphite may be from 21.0µm to 35.0µm, from 25.0µm to 30.0µm, from 30.0µm to 48.0µm, and from 32.0µm to 45.0µm.

In some embodiments, the particle size distribution (Dᵥ90-Dᵥ10)/Dᵥ50 of the negative active material may be from 1.10 to 1.60. The particle size distribution (Dᵥ90-Dᵥ10)/Dᵥ50 of the negative active material may fall within the numerical range with the end points being selected from any two of values listed as follows: 1.10, 1.25, 1.30, 1.35, 1.50, 1.55, and 1.60. For example, the particle size distribution (Dᵥ90-Dᵥ10)/Dᵥ50 of the negative active material may be from 1.10 to 1.50, from 1.10 to 1.30, from 1.10 to 1.25, from 1.30 to 1.55, from 1.35 to 1.55, and from 1.50 to 1.50.

In order to make the particle size distribution (Dᵥ90-Dᵥ10)/Dᵥ50 of the negative active material fall within the above-mentioned range, in some embodiments, the particle size distribution (Dᵥ90-Dᵥ10)/Dᵥ50 of the artificial graphite may be from 1.25 to 1.95. The particle size distribution (Dᵥ90-Dᵥ10)/Dᵥ50 of artificial graphite may fall within the numerical range with the end points being selected from any two of values listed as follows: 1.25, 1.30, 1.35, 1.45, 1.65, 1.80, and 1.95, for example, the particle size distribution (Dᵥ90-Dᵥ10)/Dᵥ50 of artificial graphite may be from 1.25 to 1.95, from 1.25 to 1.65, from 1.30 to 1.45, and from 1.35 to 1.80.

In order to make the particle size distribution (Dᵥ90-Dᵥ10)/Dᵥ50 of the negative active material fall within the above-mentioned range, in some embodiments, the particle size distribution (Dᵥ90-Dᵥ10)/Dᵥ50 of natural graphite may be from 0.88 to 1.30. The particle size distribution (Dᵥ90-Dᵥ10)/Dᵥ50 of natural graphite may fall within the numerical range with the end points being selected from any two of values listed as follows: 0.88, 0.90, 0.98, 1.05, 1.18, 1.25, 1.28, and 1.30, for example, the particle size distribution (Dᵥ90-Dᵥ10)/Dᵥ50 of natural graphite may be from 0.88 to 1.28, from 0.90 to 1.30, from 0.98 to 1.18, and from 1.05 to 1.25.

Dᵥ99, Dᵥ90, Dᵥ50, and Dᵥ10 of the negative active material, artificial graphite and natural graphite have the meanings well-known in the art, and can be tested by methods well-known in the art. For example, the test may be conducted by means of a laser particle size analyzer (such as Malvern Master Size 3000) with reference to the standard GB/T 19077.1-2016. Dᵥ99 refers to the particle size at which the cumulative volume distribution percentage of the material reaches 99%; Dᵥ90 refers to the particle size at which the cumulative volume distribution percentage of the material reaches 90%; Dᵥ50 refers to the particle size at which the cumulative volume distribution percentage of the material reaches 50%; and Dv10 refers to the particle size at which the cumulative volume distribution percentage of the material reaches 10%.

In some embodiments, the number percentage of the secondary particles in the artificial graphite may be from 25% to 80%. The number percentage of the secondary particles in the artificial graphite may fall within the numerical range with the end points being selected from any two of values listed as follows: 25%, 30%, 35%, 40%, 45%, 50%, 55%, 60%, 65%, 70%, 75%, and 80%. For example, the number percentage of secondary particles in artificial graphite may be from 25% to 60%, from 30% to 50%, from 30% to 45%, from 35% to 50%, from 35% to 45%, from 50% to 80%, from 55% to 75%, from 60% to 75%, and from 65% to 80%.

In some embodiments, the natural graphite includes primary particles, and the number percentage of primary particles in the natural graphite may be ≥90%; for example, ≥95%, ≥97%, ≥98%. Optionally, all the natural graphite is primary particles (that is, the number percentage of the primary particles in the natural graphite is 100%). By means of this, the side reactions of natural graphite with electrolyte during the battery cycle can be significantly reduced, thereby improving the cycle performance of the battery; moreover, the compaction density of the negative electrode film is also increased, thereby increasing the energy density of the battery.

In some embodiments, the tap density of the negative active material may be from 1.0 g/cm³ to 1.3 g/cm³. The tap density of the negative active material may fall within the numerical range with the end points being selected from any two of values listed as follows: 1.0g/cm³, 1.05g/cm³, 1.09g/cm³, 1.10g/cm³, 1.15g /cm³, 1.2g/cm³, and 1.3g/cm³. For example, the tap density of the negative active material may be from 1.05g/cm³ to 1.2g/cm³, from 0.90g/cm³ to 1.20g/cm³, from 1.0g/cm³ to 1.09g/cm³, from 1.05g/cm³ to 1.15g/cm³, and from 1.10g/cm³ to 1.15g/cm³.

The tap density of the negative active material has a well-known meaning in the art, and can be tested by methods well-known in the art. For example, the test may be conducted on a powder tap density tester (such as Dandong Baxter BT-301) with reference to the standard GB/T 5162-2006.

In order to make the tap density of the negative active material fall within the above-mentioned range, in some embodiments, the tap density of the artificial graphite may be from 0.85 g/cm³ to 1.35 g/cm³. The tap density of artificial graphite may fall within the numerical range with the end points being selected from any two of values listed as follows: 0.85g/cm³, 0.90g/cm³, 0.95g/cm³, 1.05g/cm³, 1.15g/ cm³, 1.18g/cm³, 1.2g/cm³, 1.25g/cm³, 1.30g/cm³, and 1.35g/cm³. For example, the tap density of artificial graphite may be from 0.85g/cm³ to 1.25g/cm³, from 0.90g/cm³ to 1.18g/cm³, from 0.90g/cm³ to 1.35g/cm³, from 0.9g/cm³ to 1.30g/cm³, from 0.9g/cm³ to 1.20g/cm³, from 0.95g/cm³ to 1.15g/cm³, from 1.05g/cm³ to 1.15g/cm³, and from 1.15g/cm³ to 1.30g/cm³.

In order to make the tap density of the negative active material fall within the above-mentioned range, in some embodiments, the tap density of natural graphite may be from 0.80 g/cm³ to 1.35 g/cm³. The tap density of natural graphite may fall within the numerical range with the end points being selected from any two of values listed as follows: 0.80g/cm³, 0.90g/cm³, 0.93g/cm³, 0.95g/cm³, 1.00g/ cm³, 1.13g/cm³, 1.15g/cm³, 1.18g/cm³, 1.20g/cm³, 1.30g/cm³, 1.35g/cm³. For example, the tap density of natural graphite may be from 0.8g/cm³ to 1.35g/cm³, from 0.80g/cm³ to 1.30g/cm³, from 0.90g/cm³ to 1.18g/cm³, from 0.90g/cm³ to 1.20g/cm³, from 0.93g/cm³ to 1.13g/cm³, from 0.95g/cm³ to 1.2g/cm³, from 0.95g/cm³ to 1.15g/cm³, and from 1.00g/cm³ to 1.20g/cm³.

In some embodiments, the graphitization degree of the negative active material may be from 92% to 96%. The graphitization degree of the negative active material may fall within the numerical range with the end points being selected from any two of values listed as follows: 92%, 92.3%, 92.7%, 93%, 93.4%, 94%, 94.2%, 94.4 %, 94.7%, 95%, 95.2%, 95.5%, and 96%. For example, the graphitization degree of the negative active material may be from 92% to 95%, from 93% to 95%, from 93% to 94%, from 94% to 96%, and from 94.2% to 95.5%.

In order to make the graphitization degree of the negative active material fall within the above-mentioned range, in some embodiments, the graphitization degree of the artificial graphite may be from 90% to 95%. The graphitization degree of artificial graphite may fall within the numerical range with the end points being selected from any two of values listed as follows: 90%, 91%, 92%, 93%, 94%, and 95%, for example, the graphitization degree of the artificial graphite may be from 91% to 94%, from 91% to 93%, from 92% to 95%, and from 93% to 95%.

In order to make the graphitization degree of the negative active material fall within the above-mentioned range, in some embodiments, the graphitization degree of natural graphite may be from 93% to 98%. The graphitization degree of natural graphite may fall within the numerical range with the end points being selected from any two of values listed as follows: 93%, 94%, 95%, 96%, 97%, and 98%, for example, the graphitization degree of natural graphite may be from 94% to 98%, from 94% to 97%, from 95% to 98%, from 95% to 97%, and from 96% to 97%.

The degree of graphitization degree of the negative active material, natural graphite, and artificial graphite has a well-known meaning in the art, and can be tested by a method well-known in the art. For example, the test may be conducted on an X-ray diffraction instrument (such as Bruker D8 Discover). The test may refer to JIS K 0131-1996, JB/T 4220-2011: measuring the size of d₀₀₂, and calculating the graphitization degree according to a formula G=(0.344-d₀₀₂)/(0.344-0.3354)×100%, wherein d₀₀₂ is the interlayer spacing in the graphite crystal structure in nm. In the X-ray diffraction analysis test, CuKu rays are used as a radiation source, the ray wavelength is λ=1.5418Å, the scanning 20 angle is in a range of 20°-80°, and the scanning rate is 4°/min. In some embodiments, the artificial graphite does not have a coating layer on its surface. The artificial graphite according to the present application has a relatively stable surface. When there is not a coating layer on the surface, it is beneficial to maintain its lower reactivity (because the carbon coating layer has a reactivity higher than that the surface of the artificial graphite substrate according to the present application), and thus is beneficial to reduce the side reactions during the battery cycle, thereby further improving the cycle performance of the battery at high temperature.

In some embodiments, the natural graphite has a coating layer (for example, a carbon coating layer) on its surface. The natural graphite according to the present application has a high surface activity, and a coating layer formed on its surface may reduce its surface activity (because natural graphite has many defects on the surface after being subjected to spheroidization and purification treatment, the coating layer formed by carbonization could effectively repair surface defects, and thus reduce side reactions during cycling), thereby further improving the cycling performance of the battery at high temperature. The carbon coating layer may be formed on the surface of natural graphite by the calcination and thermal decomposition of petroleum or coal pitch.

When S falls within the given range and simultaneously satisfies the above design, the side reactions of the battery during the cycle are significantly reduced, and thus the accumulation of the irreversible product on the plate is effectively reduced, thereby further improving the cycle performance of the battery at high temperature and expansion rate of the plate.

The transmission electron microscope (TEM) image may be used to test whether or not there is a coating layer on the surface of artificial graphite and natural graphite. As an example, the test may be conducted as follows: selecting a micro-grid having certain diameter (for example, 3mm in diameter); clamping the edge of the micro-grid with pointed tweezers, with the film side turning up (observing the glossy surface i.e. film surface under lamplight), and gently placing it on the white filter paper; taking an appropriate amount (for example, 1g) of graphite particles sample and putting them into a beaker containing an appropriate amount of ethanol; conducting ultrasonic vibration for 10 to 30 minutes; sucking the sample to be tested with a glass capillary, and then dropping 2-3 drops of the sample to be tested on the micro-grid; baking it in the oven for 5 minutes; placing the micro-grid, on which the sample to be tested is dropped, on the sample stage; and observing it on a transmission electron microscope (for example, Hitachi HF-3300S Cs-corrected STEM) at certain zoom multiple (for example, 60000 times), thereby obtaining a transmission electron microscope (TEM) image of the sample to be tested.

In some embodiments, the mass percentage of natural graphite in the negative active material is less than or equal to 50%, for example, it may be from 10% to 50%. The mass percentage of natural graphite in the negative active material may fall within the numerical range with the end points being selected from any two of values listed as follows: 10%, 15%, 20%, 25%, 30%, 35%, 40%, 45%, and 50%. For example, the mass percentage of natural graphite in the negative active material may be from 10% to 30%, from 15% to 25%, from 20% to 50%, from 35% to 50%, and from 35% to 45%.

The negative current collector may be made of materials having good electrical conductivity and mechanical strength, serving as conducting electricity and collecting current. In some embodiments, copper foil may be used as the negative current collector. The negative current collector has two surfaces that are opposite in its thickness direction, and the negative electrode film is laminated on either or both of the surfaces of the negative current collector.

It should be noted that in this application, when negative electrode films are arranged on two surfaces of the negative current collector, the negative electrode film on any one of the surfaces meets the requirements of the present application, that is, falls within the protection scope of the present application.

In some embodiments, optionally, negative active material may comprise other active materials which may include, but are not limited to, one or more of hard carbon, soft carbon, silicon-based materials, and tin-based materials. The silicon-based material may be one or more selected from elementary silicon, silicon-oxygen compounds, silicon-carbon composites, silicon-nitrogen compounds, and silicon alloys. The tin-based material may be one or more selected from elementary tin, tin oxide compounds, and tin alloys.

In some embodiments, the negative electrode film may further include a binder. As an example, the binder used for the negative electrode film may be one or more selected from polyacrylic acid (PAA), sodium polyacrylate (PAAS), polyacrylamide (PAM), polyvinyl alcohol (PVA), styrene butadiene rubber (SBR), seaweed sodium (SA), polymethacrylic acid (PMAA) and carboxymethyl chitosan (CMCS).

In some embodiments, the negative electrode film further includes a thickener. As an example, the thickener may be sodium carboxymethyl cellulose (CMC-Na).

In some embodiments, the negative electrode film further includes a conductive agent. As an example, the conductive agent used for the negative electrode film may be one or more selected from superconducting carbon, acetylene black, carbon black, Ketjen black, carbon dots, carbon nanotubes, graphene, and carbon nanofibers.

In some embodiments, the areal density of the negative electrode film prepared using the above-mentioned negative active material may be from 7mg/cm² to 13mg/cm². The areal density of the negative electrode film may fall within the numerical range with the end points being selected from any two of values listed as follows: 7mg/cm², 8mg/cm², 10mg/cm², 10.5mg/cm², 11.5mg/cm², and 13.0 mg/cm². For example, the areal density of the negative electrode film may be from 7mg/cm² to 10mg/cm², from 7mg/cm² to 8mg/cm², from 10.0mg/cm² to 13.0mg/cm², and from 10.5mg/cm² to 11.5mg/cm².

The areal density of the negative electrode film has a meaning well-known in the art, and may be measured using instruments and methods well-known in the art. For example, the test comprises: taking a cold-pressed negative electrode plate; punching it into a small round having an area of S1; weighing it, recording the weight as M1; then wiping off the negative electrode films of the above weighted negative plate; weighting the negative current collector, recording the weight as M0. Areal density of the negative electrode film = weight of the negative electrode film / S1. It should be noted that when the negative electrode film is arranged on only one surface of the negative current collector, the weight of the above-mentioned negative electrode film = M1-M0; when the negative electrode film is simultaneously arranged on both surfaces of the negative current collector, the weight of the negative electrode film = (M1-M0)/2.

In some embodiments, the compaction density of the negative electrode film prepared using the above-mentioned negative active material may be from 1.40 g/cm³ to 1.80 g/cm³. The compaction density of the negative electrode film may fall within the numerical range with the end points being selected from any two of values listed as follows: 1.40g/cm³, 1.50g/cm³, 1.40g/cm³, 1.55g/cm³, 1.60g /cm³, 1.65g/cm³, 1.68g/cm³, 1.70g/cm³, 1.73g/cm³, 1.75g/cm³, and 1.80g/cm³. For example, the compacted density of the negative electrode film may be from 1.50g/cm³ to 1.70g/cm³, from 1.55g/cm³ to 1.60g/cm³, from 1.60g/cm³ to 1.80g/cm³, from 1.65g/cm³ to 1.75g/cm³, and from 1.68g/cm³ to 1.73g/cm³.

The compaction density of the negative electrode film has a meaning well-known in the art, and may be tested by a method well-known in the art. For example, the test comprises: taking a cold-pressed negative plate, measuring the thickness of the negative electrode film (here, measuring the thickness of the negative electrode film on any surface of the negative current collector), and then testing the areal density of the negative electrode film according to the above-mentioned method. Compaction density of the negative electrode film = areal density of the negative electrode film / thickness of the negative electrode film.

In some embodiments, the cohesion force F of the negative electrode film prepared using the above-mentioned negative active material may satisfy 150N/m≤F≤300N/m. The cohesion force F of the negative electrode film may fall within the numerical range with the end points being selected from any two of values listed as follows: 150N/m, 180N/m, 220N/m, 240N/m, 250N/m, 260N/m, and 300N/m. For example, the cohesion force F of the negative electrode film may be from 150N/m to 250N/m, from 180N/m to 220N/m, from 220N/m to 300N/m, and from 240N/m to 260N/m.

The cohesion of the negative electrode film has a meaning well-known in the art, and may be tested by methods well-known in the art. An exemplary test method is as follows: taking a cold-pressed negative plate (if two sides of the negative plate are coated as negative electrode film, wiping off the negative electrode film on one side); cutting the negative plate into a sample to be tested having a length of 100mm and a width of 10mm; taking a stainless steel plate having a width of 25mm; pasting a double-sided tape (having a width of 11mm) on the stainless steel plate, and then pasting the sample to be tested on the double-sided tape pasted on the stainless steel plate, with the negative current collector being bonded to the double-sided tape; rolling with a 2000g pressure roller on the tested sample back and forth for three times at a rate of 300mm/min; then pasting a tape having a width of 10 mm and a thickness of 50 µm on the surface of the negative electrode film, and rolling with a 2000 g pressure roller on the surface thereof back and forth for three times at a rate of 300 mm/min; bending the tape for 180 degrees, and manually peeling off the tape from negative electrode film by 25 mm; fixing the sample on a Instron 336 tensile testing machine, with the peeled surface running parallel with the force line of the testing machine (that is, conducting a 180 degree peeling), and peeling continuously at 300mm/min, thereby obtaining the cohesion force curve of the negative plate, taking the average of the value of the plateau as the peeling force F₀, cohesion force of the negative electrode film F = F₀/width of the sample to be tested, wherein the measurement unit of F is N/m. In order to ensure the accuracy of the testing results, the above steps may be repeated 6 times, and the average of the cohesion of the 6 times of tests may be taken.

It should be noted that, in the tests of various above-mentioned parameters directing at the negative active material or the negative electrode film, it may be sampled for testing during preparing the battery or from the readily prepared secondary battery. When the test sample is sampled from a readily prepared secondary battery, as an example, sampling may be conducted as follows:
(1) Discharging the secondary battery (for safety, the battery is generally fully discharged); disassembling the battery to take out the negative plate, and soaking the negative plate in dimethyl carbonate (DMC) for certain period of time (for example, 2-10 hours); then taking out the negative plate and drying it at certain temperature and time (for example, 60°C, 4h), after drying, taking out the negative plate. At this time, the dried negative plate may be sampled for testing the above-mentioned parameters related to the negative electrode film (for example, the areal density and compaction density of the negative electrode film).
(2) Baking the dried negative plate obtained from step (1) at certain temperature and time (for example, 400°C, 2h), selecting any one area on the baked negative plate, and sampling from the negative active material (sampling of scraping powder with a blade may be selected).
(3) Sieving the negative active material collected in step (2) (for example, sieving with a 200-mesh sieve), thereby obtaining the sample for testing the above-mentioned parameters of the negative active material.

### [Positive plate]

The positive plate may include a positive current collector and a positive film arranged on at least one surface of the positive current collector. As an example, the positive current collector has two surfaces opposite in the thickness direction thereof, and the positive electrode film is laminated on either or both of the two surfaces.

The positive current collector may be made of materials having good electrical conductivity and mechanical strength, serving to conduct electricity and collect current. In some embodiments, aluminum foil may be used as the positive current collector.

The positive film includes a positive active material. Positive active material for secondary battery well-known in the art may be used as the positive active material. For example, the positive active material may include one or more of layered lithium transition metal oxides and the modified compounds thereof, olivine-structured lithium-containing phosphates and modified compounds thereof, and the like.

In some embodiments, the positive active material includes layered lithium transition metal oxides and the modified compounds thereof. Examples of layered lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide and the modified compounds thereof. Optionally, the layered lithium transition metal oxide may be one or more selected from lithium nickel cobalt manganese oxide, lithium nickel cobalt aluminum oxide and modified compounds thereof.

In the context, the modified compound of the layered lithium transition metal oxide may be the layered lithium transition metal oxide that is subjected to doping modification and/or surface coating modification.

In some embodiments, the positive active material includes layered lithium transition metal oxides and the modified compounds thereof (especially including lithium nickel cobalt manganese oxide, lithium nickel cobalt aluminum oxide and the modified compounds thereof), and the negative active material includes artificial graphite and natural graphite, wherein the artificial graphite includes primary particles and secondary particles, with the number percentage S of the secondary particles in the negative active material satisfying: 10%<S<50%. In particular, when S satisfies 10%≤S≤30%, such as 15%≤S≤30%, such as 20%, 25% and 30%, the battery have good dynamic performance and simultaneously cycle performance at high temperature.

The inventors of the present application, after reaching, has further found that, when the positive active material includes one or more of layered lithium transition metal oxides and the modified compounds thereof (especially including lithium nickel cobalt manganese oxide, lithium nickel cobalt aluminum oxide and the modified compounds thereof), when the negative active material includes artificial graphite and natural graphite, when the artificial graphite includes primary particles and secondary particles both, and when the number percentage S of secondary particles in the negative active material satisfies the range provided according to the present application;, the performance of the battery may be further improved in the event that the negative active material optionally further satisfies one or more of the following conditions.

In some embodiments, the volume average particle size Dᵥ50 of the negative active material is less than or equal to 14.0µm. The volume average particle size Dᵥ50 of the negative active material may fall within the numerical range with the end points being selected from any two of values listed as follows: 8.0µm, 8.5µm, 8.9µm, 9.0µm, 9.2µm, 9.6µm, 10.0µm , 10.2µm, 10.5µm, 10.8µm, 11.2µm, 11.6µm, 11.9µm, 12.2µm, 12.4µm, 12.8µm, 13.1µm, 13.2µm, 13.5µm, 13.8µm, 13.9µm, and 14.0µm. For example, the volume average particle size Dᵥ50 of the negative active material may be from 8.0µm to 14.0µm, from 8.0µm to 12.0µm, from 8.5µm to 13.5µm, from 8.5µm to 13.0µm, from 8.5µm to 12.5µm, from 8.5µm to 11.5µm, from 8.9µm to 12.2µm, from 9.0µm to 14.0µm, from 9.0µm to 13.5µm, from 9.2µm to 14.0µm, from 10.0µm to 13.5µm, from 11.0µm to 14.0µm, from 11.5µm to 13.5µm, and from 12.0µm to 14.0µm.

The inventors of the present application, after researching, has found that, when the positive active material includes one or more of layered lithium transition metal oxide and the modified compounds thereof, S falls within the provided range, and simultaneously Dv50 of the negative active material is adjusted to fall within the provided range, the cyclic expansion rate of the plate may be further reduced without affecting other performances (such as dynamic performance and cycle performance at high temperature), thereby further improving the safety performance of the battery. The inventors, after researching, has found that, when the positive active material includes one or more of the layered lithium transition metal oxide and the modified compounds thereof, S falls within the provided range, and simultaneously Dᵥ50 of the negative active material falls within the above range, the polarization of the battery may be reduced, the side reactions may be effectively reduced, the probability of lithium precipitation from the plate may be significantly reduced, and the cycle expansion rate of the negative plate may be reduced, thus, the safety performance of the battery is further improved.

In order to make the volume average particle size Dᵥ50 of the negative active material fall within the above-mentioned range, in some embodiments, the volume average particle size Dᵥ50 of the artificial graphite may be from 10.0µm to 14.5µm, and optionally may be from 11.0µm-13.5µm, for example, is 10.3µm, 10.8µm, 11.4µm, 12.3µm, 13.0µm, and 14.0µm.

In order to make the volume average particle size Dᵥ50 of the negative active material fall within the above range, in some embodiments, the volume average particle size Dᵥ50 of the natural graphite may be from 7.0 µm to 14.0µm, and optionally may be from 7.0µm-13.0µm, for example, is 7.1µm, 8.7µm, 11.2µm, 12.1µm, 12.4µm, and 12.8µm.

In some embodiments, the volume particle size distribution Dᵥ90 of the negative active material may be from 16.0 µm to 25.0µm, and optionally may be from 20.0µm to 25.0µm. When the positive active material includes one or more of the layered lithium transition metal oxide and the modified compounds thereof, S falls within the provided range, and simultaneously Dᵥ90 of the negative active material is adjusted to fall within the provided range, good dynamic performance, cycle performance at high temperature and safety performance may be obtained simultaneously.

In order to make the volume particle size distribution Dᵥ90 of the negative active material fall within the above range, in some embodiments, the volume particle size distribution Dv90 of the artificial graphite may be from 23.0µm to 30.0µm, and optionally may be from 25.0µm to 29.0µm.

In order to make the volume particle size distribution Dᵥ90 of the negative active material fall within the above range, in some embodiments, the volume particle size distribution Dᵥ90 of the natural graphite may be from 15.0µm to 23.0µm, and optionally may be from 18.0µm to 21.0µm.

In some embodiments, the volume particle size distribution Dᵥ99 of the negative active material may be from 25.0 µm to 37.0 µm, and optionally may be from 33.0 µm to36.5 µm. When the positive active material includes one or more of the layered lithium transition metal oxide and the modified compounds thereof, S falls within the provided range, and simultaneously Dᵥ99 of the negative active material is adjusted to fall within the provided range, the better dynamic performance, cycle performance at high temperature and safety performance of batteries may be obtained simultaneously.

In order to make the volume particle size distribution Dᵥ99 of the negative active material fall within the above range, in some embodiments, the volume particle size distribution Dᵥ99 of the artificial graphite may be from 30.0 µm to 45.0 µm, and optionally may be from 32.0 µm to 43.0 µm.

In order to make the volume particle size distribution Dᵥ99 of the negative active material fall within the above range, in some embodiments, the volume particle size distribution Dᵥ99 of the natural graphite may be from 21.0 µm-35.0 µm, and optionally may be from 25.0 µm to 30.0 µm.

In some embodiments, the particle size distribution (Dᵥ90-Dᵥ10)/Dᵥ50 of the negative active material may be from 1.30 to 1.55, and optionally may be from 1.35 to1.50. When the positive active material includes one or more of the layered lithium transition metal oxide and the modified compounds thereof, S falls within the provided range, and simultaneously particle size distribution (Dᵥ90-Dᵥ10)/Dᵥ50 of the negative active material is adjusted to fall within the provided range, the better dynamic performance, cycle performance at high temperature and safety performance of batteries may be obtained simultaneously.

In order to make the particle size distribution (Dᵥ90-Dᵥ10)/Dᵥ50 of the negative active material fall within the above range, in some embodiments, the particle size distribution (Dᵥ90-Dᵥ10)/Dᵥ50 of the artificial graphite may be from 1.25 to 1.95, and optionally may be from 1.35 to 1.80 .

In order to make the particle size distribution (Dᵥ90-Dᵥ10)/Dᵥ50 of the negative active material fall within the above range, in some embodiments, the particle size distribution (Dᵥ90-Dᵥ10)/Dᵥ50 of natural graphite may be from 0.88 to1.28, and optionally may be from 0.98 to 1.18.

In some embodiments, the number percentage of the secondary particles in the artificial graphite is from 25% to 60%, and optionally is from 30% to 50%. When the positive active material includes one or more of the layered lithium transition metal oxide and the modified compounds thereof, the energy density of the battery may be much improved, but the cycle life may be relatively poor. When the number percentage of the secondary particles in the negative active material and that of the secondary particles in the artificial graphite both fall within the provided ranges, the cohesion and adhesive force of the negative electrode film may be effectively improved on the premise of ensuring lower expansion rate of the negative plate. As a result, the cycle performance of the battery at the high temperature is further improved.

In some embodiments, the tap density of the negative active material is ≥ 1.10 g/cm³, and optionally may be from 1.10 g/cm³ to 1.15 g/cm³. When the positive active material includes one or more of the layered lithium transition metal oxide and the modified compounds thereof, S falls within the provided range, and simultaneously the tap density of the negative active material is adjusted to fall within the provided range, the energy density and dynamic performance of the battery may be further improved. In order to make the tap density of the negative active material fall within the above range, in some embodiments, the tap density of the artificial graphite may be from 0.90g/cm³ to 1.20g/cm³, and optionally may be from 1.05g/cm³ to 1.15g/cm³.

In order to make the tap density of the negative active material fall within the above range, in some embodiments, the tap density of natural graphite may be from 0.90g/cm³ to 1.18g/cm³, for example, may be from 0.93g/cm³ to 1.13g/cm³.

In some embodiments, the graphitization degree of the negative active material may be from 92% to 96%, and optionally may be from 93% to 95%. When the positive active material includes one or more of the layered lithium transition metal oxide and the modified compounds thereof, S falls within the provided range, and simultaneously the graphitization degree of the negative active material is adjust to fall within the provided range, the energy density and cycle expansion of the battery may be further improved.

In order to make the graphitization degree of the negative active material fall within the above range, in some embodiments, the graphitization degree of the artificial graphite may be from 92% to 95%, and optionally may be from 93% to 95%.

In order to make the graphitization degree of the negative active material fall within the above range, in some embodiments, the graphitization degree of natural graphite may be from 95% to 98%, for example, may be from 95% to 97%.

In some embodiments, there is no a coating layer on the surface of the artificial graphite.

In some embodiments, there is a carbon coating layer on the surface of natural graphite.

In some embodiments, the mass percentage of the natural graphite in the negative active material is ≤ 30%, for example, it may be from 10% to 30%, and from 15% to 25%. When the positive active material includes one or more of the layered lithium transition metal oxides and the modified compounds thereof, S falls within the provided range, and simultaneously the mass percentage of the natural graphite in the negative active material is adjusted to fall within the provided range, the high temperature cycle performance and safety performance of the battery may be further improved.

In some embodiments, the gram capacity of the negative active material may be from 351mAh/g to 359mAh/g, and optionally may be from 353mAh/g to 357mAh/g. When the positive active material includes one or more of the layered lithium transition metal oxide and the modified compounds thereof, S falls within the provided range, and simultaneously the gram capacity of the negative active material is adjusted to fall within the provided range, the dynamic performance and energy density of the secondary battery may be further improved.

In order to make the gram capacity of the negative active material fall within the above range, in some embodiments, the gram capacity of artificial graphite may be from 349 mAh/g to 357mAh/g, and optionally may be from 351 mAh/g to 355 mAh/g.

In order to make the gram capacity of the negative active material fall within the above range, in some embodiments, the gram capacity of natural graphite may be from 360 mAh/g to 367 mAh/g, for example, may be from 361 mAh/g to 365 mAh/g.

In some embodiments, when the positive active material includes one or more of the layered lithium transition metal oxide and the modified compounds thereof, and S falls within the provided range, the compaction density of the negative electrode film may be from 1.60 g/ cm³ to 1.80g/cm³, for example, may be from 1.65g/cm³ to 1.75g/cm³, from 1.68g/cm³ to 1.73g/cm³. When the compaction density of the negative electrode film falls within the above range, it is helpful to render the number percentage S of the secondary particles in the negative electrode film fall within the provided range. Thus, the cycle life of the battery may be further improved and simultaneously the probability of defects on the surface of the negative active material may be effectively reduced, the side reactions are reduced, and the expansion of the battery during cycling is reduced. As a result, the safety performance of the battery may be further improved.

In some embodiments, when the positive active material includes one or more of the layered lithium transition metal oxide and the modified compounds thereof and S falls within the provided range, the areal density of the negative electrode film may be 10.0 mg/cm² to 13.0mg/cm², and optional may be 10.5mg/cm² to 11.5mg/cm². When the areal density of the negative electrode film falls within the above range, the battery may have a higher energy density, and the battery has better active ions and electrons transportation performance, the dynamic performance of the battery may be further improved, the polarization and side reactions may be further reduced, and thus the cycle performance of the battery may be further improved.

In some embodiments, when the positive electrode active material includes one or more of the layered lithium transition metal oxide and the modified compounds thereof, and S falls within the provided range, the cohesion force F of the negative electrode film satisfies: 220N/m≤F≤300N/m, for example, satisfies 240N/m≤F≤260N/m. By rendering the negative electrode film have suitable cohesion force inside thereof, the structure of the negative active material may be protected from being damaged; moreover the negative electrode film has a porosity that can make the electrolyte quickly infiltrate, especially the negative electrode film has higher active ions and electrons transportation performance, and the cycle expansion force of batteries may be reduced simultaneously. Therefore, by using the negative electrode film, the cycle performance and dynamic performance of the battery may be further improved. In addition, when the cohesion of the negative electrode film is controlled within an appropriate range, the amount of binder added in the negative electrode film may be reduced.

In some embodiments, the positive active material includes a layered lithium transition metal oxide having a general formula of LiₐNi_{b}Co_{c}M_{d}M'ₑO_{f}A_{g}, wherein 0.8≤a≤1.2, 0<b<1, 0<c<1, 0<d<1 , 0≤e≤0.1, 1≤f≤2, and 0≤g≤1; M is one or more selected from the group consisting of Mn and Al; M' is one or more selected from Zr, Mn, Al, Zn, Cu, Cr, Mg, Fe, V, Ti, and B; and A is one or more selected from N, F, S, and Cl. Optionally, 0.6≤b<1, for example, 0.65≤b<1. The inventors have found that, when b falls within this range, the improvement in the safe performance of the battery is more significant in the event that the negative active material matches with the positive active material in any of the above embodiments.

When the positive active material includes one or more of the layered lithium transition metal oxide and the modified compounds thereof, in order to obtain the secondary battery according to the present application, the negative active material according to the present application may be prepared according to the following steps:
I. Preparation of artificial graphite
   1. Preparation of artificial graphite A

   (1) Taking a non-needle-like petroleum coke as a raw material, smashing the raw material and removing fine powder;
   (2) Placing the raw material into a reaction kettle for heating, shaping, and removing fine powder, thereby obtaining an intermediate product 1; and
   (3) Graphitizing the intermediate product 1 at a high temperature, thereby obtaining an intermediate product 2; and mixing the intermediate product 2 in a mixer and then sieving, thereby obtaining the artificial graphite A.

In some embodiments, in the above-mentioned preparation method of artificial graphite A, non-needle-like petroleum coke is used as the raw material, the raw material has a volatile content of ≥6% and a sulfur content of ≤1%. The non-needle petroleum coke that meets the above conditions has good self-adhesiveness and thus is easy for preparing artificial graphite including secondary particles, which is helpful to obtain the scope of S according to the present application. Optionally, the raw material has a volatile content of 8% to 15%. Optionally, the sulfur content is ≤0.5%.

In some embodiments, in the above-mentioned method for preparing artificial graphite A, the reaction kettle may be a vertical reaction kettle or a horizontal reaction kettle. The heating temperature of the raw materials in the reaction kettle may be from 450°C to 700°C, and the holding time may be from 1h to 8h.

In some embodiments, in the above-mentioned preparation method of artificial graphite A, the rotation speed of the mixer during mixing is n≤ 500 revolutions/min. If the rotation speed of the mixer is too high, the formed secondary particles will be dispersed to become primary particles, thus the scope of S of the present application may not be satisfied. Moreover, if the rotation speed of the mixer is too high, the defects on the surface of the material will increase, thereby affecting the cycle performance of the battery at high temperature.

In some embodiments, in the above-mentioned method for preparing artificial graphite A, D_{V}50 of the raw material may be from 7 µm to 12 µm.

In some embodiments, in the above-mentioned method for preparing artificial graphite A, D_{V}50 of the intermediate product 1 may be from 11.5 µm-20.5 µm.

In some embodiments, in the above-mentioned method for preparing artificial graphite A, D_{V}50 of the artificial graphite A may be from 9 µm to 17.5 µm.

In some embodiments, in the above-mentioned method for preparing artificial graphite A, the number percentage of secondary particles in artificial graphite A may be from 30% to 70%.

In some embodiments, in the above-mentioned method for preparing artificial graphite A, the temperature for graphitizing may be from 2500°C to 3200°C.
2. Preparation of artificial graphite B

(1) Taking a needle-like green petroleum coke as a raw material, smashing the raw material and removing fine powder;
(2) Graphitizing the raw material at high temperature and sieving, thereby obtaining an artificial graphite B, wherein the artificial graphite B satisfies: the number percentage of secondary particles in the artificial graphite B is less than or equal to 3%.

The needle-like green petroleum coke refers to a raw material that has not been calcined at a high temperature (for example, 1000°C to 1500°C). This material has lower self-adhesiveness, and thus is easy for preparing the artificial graphite including primary particles.

In some embodiments, in the above-mentioned method for preparing artificial graphite B, the rotation speed of the mixer during mixing in step (2) is from 500 revolutions/min to 1000 revolutions/min. It would be helpful to make the number percentage of the secondary particles in the artificial graphite B satisfy ≤ 3% by controlling the rotation speed within the provided range.

In some embodiments, in the above-mentioned method for preparing artificial graphite B, the required values of Dᵥ50, Dᵥ90, Dᵥ99 and (Dᵥ90-Dᵥ10)/Dᵥ50 of artificial graphite B may be adjusted by adjusting the particle size of the raw material through methods well-known in the art. For example, Dᵥ50 of the raw material may be from 5.5 µm to 11 µm, and Dᵥ50 of the artificial graphite B may be from 5 µm to 10.5 µm.

In some embodiments, in the above-mentioned method for preparing artificial graphite B, the treatment temperature for graphitizing may be from 2500°C to 3200°C.

### 3. Preparation of artificial graphite

The artificial graphite A and the artificial graphite B as prepared above are mixed to obtain the artificial graphite according to the present application.

In some embodiments, in the above-mentioned method for preparing artificial graphite, the mass percentage of artificial graphite A in the artificial graphite may be from 40% to 75%, and optionally may be from 60% to75%.

The parameters of artificial graphite may be comprehensively adjusted and controlled according to the ranges as provided above.

### II. Preparation of natural graphite

1. Taking flake graphite as raw material, smashing and spheroidizing the raw material, thereby obtaining an intermediate 1;
2. Chemically purifying the intermediate 1 to obtain an intermediate 2; and
3. Drying the intermediate 2 and mixing it with pitch for carbonization treatment, and then sieving, thereby obtaining natural graphite.

In some embodiments, in the above-mentioned method for preparing natural graphite, chemically purifying intermediate 1 may be carried out using one or more of hydrochloric acid, hydrofluoric acid, and nitric acid.

In some embodiments, in the above-mentioned method for preparing natural graphite, the tap density of the obtained intermediate 1 is ≥ 0.6 g/cm³.

In some embodiments, in the above-mentioned method for preparing natural graphite, the carbon content of the obtained intermediate 2 is ≥99.9%.

In some embodiments, in the above-mentioned method for preparing natural graphite, the addition amount of the pitch amounts for 2% to 8% by weight of intermediate 2.

In some embodiments, in the above-mentioned method for preparing natural graphite, the carbonization treatment may be carried out at a temperature of 900°C to 1600°C, for a time of 2 h to 24 h.

The parameters of natural graphite may be comprehensively adjusted and controlled according to the ranges as provided above.

### III. Preparation of negative active material

The above artificial graphite and the natural graphite are mixed to obtain the negative active material of any embodiment according to the present application, wherein the negative active material comprises the artificial graphite and the natural graphite, and wherein the artificial graphite includes primary particles and secondary particles, with a number percentage S of the secondary particles in the negative active materials satisfying: 10% ≤ S ≤ 50%.

Other parameters of the negative active material may be comprehensively adjusted and controlled according to the ranges as provided above, so as to achieve the purpose of further improving the battery performance.

In some embodiments, the positive active material includes one or more of an olivine-structured lithium-containing phosphates and the doping-modified and/or coating-modified compounds thereof. Examples of olivine-structured lithium-containing phosphates may include, but are not limited to, one or more of lithium iron phosphates, composites of lithium iron phosphates and carbon, lithium manganese phosphates, composite of lithium manganese phosphates and carbon, lithium iron manganese phosphates, composites of lithium iron manganese phosphates and carbon, and the modified compounds thereof. Optionally, the olivine-structure lithium-containing phosphates are one or more selected from lithium iron phosphates, composite of lithium iron phosphates and carbon, and the modified compounds thereof.

In some embodiments, the positive active material comprises one or more of olivine-structured lithium-containing phosphates and the doping-modified and/or coating-modified compounds thereof, and the negative electrode active material comprises artificial graphite and natural graphite, wherein the artificial graphite includes primary particles and secondary particles, with the number percentage S of the secondary particles in the negative active material satisfying 10%≤S≤50%. Especially, when the number percentage S of the secondary particles in the negative active material satisfies 15%≤S≤45%, such as 25%≤S≤35%, such as 17%, 23%, 25%, 28%, 30%, 32%, 34%, 35% and 42%, the cycle performance at high temperature of the battery may be further improved.

The inventors of the present application after researching has further found, that given that the positive active material comprises one or more of the olivine-structured lithium-containing phosphates and the doping-modified and/or coating-modified compounds thereof, and given that the negative active material comprises artificial graphite and natural graphite, wherein the artificial graphite include primary particles and secondary particles, with the number percentage S of secondary particles in the negative active material falling within the range provided in this application, the performance of the battery may be further improved in the event that the negative active material further optionally satisfies one or more of following conditions.

In some embodiments, the volume average particle size Dᵥ50 of the negative active material is ≥15.0µm , and optionally may be from 15.0µm to 19.0µm, and from 16.0µm to 18.0µm, for example, 15.3µm, 15.9µm, 16.5µm, 16.7µm, 17.5µm , 18.0µm, 18.6µm, and 19.0µm. When the positive active material comprises one or more of olivine- structured lithium-containing phosphates and the doping- and/or coating modified compounds thereof, and S falls within the provided range, and simultaneously the volume average particle size Dᵥ50 of the negative active material is adjusted to fall within the provided range, the cycle performance at high temperature of the battery may be further improved.

In order to make the volume average particle size Dᵥ50 of the negative active material fall within the above range, in some embodiments, the volume average particle size Dᵥ50 of the artificial graphite may be from 14.0µm to 19.0µm, and optionally may be from 14.0µm to 18.0µm, from 15.0µm to 18.0µm, and from 15.0µm to 17.0µm, for example, 15.1µm, 15.8µm, 16.6µm, 17.1µm, 18.0µm, 18.6µm, and 18.9µm.

In order to make the volume average particle size Dᵥ50 of the negative active material fall within the above range, in some embodiments, the volume average particle size Dᵥ50 of natural graphite may be from 15.0µm to 20.0µm, and optionally may be from 15.0µm to 19.0µm, from 16.0µm to 19.0µm, and from 16.0µm to 18.0µm, for example, 15.4µm, 16.5µm, 16.8µm, 17.7µm, 17.9µm, 18.2µm, and 18.5µm.

In some embodiments, the volume particle size distribution Dᵥ90 of the negative active material may be from 25.0µm to 33.0µm, and optionally may be from 26.0µm to 30.0µm. When the positive active material comprises one or more of the olivine-structured lithium-containing phosphates and the doping-modified and/or coating-modified compounds thereof, S falls within the provided range, and simultaneously Dᵥ90 of the negative active material is adjusted to fall within the provided range, the dynamic performance and cycle performance at high temperature of the battery may be further improved.

In order to make the volume particle size distribution Dᵥ90 of the negative active material fall within the above range, in some embodiments, the volume particle size distribution Dᵥ90 of the artificial graphite may be from 25.0µm-37.0µm, and optionally may be from 27.0µm-33.0µm.

In order to make the volume particle size distribution Dᵥ90 of the negative active material fall within the above range, in some embodiments, the volume particle size distribution Dᵥ90 of the natural graphite may be from 25.0µm to 35.0µm, and optionally may be from 25.0µm to 31.0µm.

In some embodiments, the volume particle size distribution Dᵥ99 of the negative active material may be from 35.0µm to 43.0µm, and optionally may be from 38.0µm to 40.0µm. When the positive active material comprises one or more of the olivine-structured lithium-containing phosphate and the doping-modified and/or coating-modified compounds thereof, S falls within the provided range, and simultaneously Dᵥ99 of the negative active material is adjusted to fall within the provided range, the dynamic performance and cycle performance at high temperature of the battery may be further improved.

In order to make the volume particle size distribution Dᵥ99 of the negative active material fall within the above range, in some embodiments, the volume particle size distribution Dᵥ99 of the artificial graphite may be from 38.0µm to 50.0µm, and optionally may be from 40.0µm to 48.0µm.

In order to make the volume particle size distribution Dv99 of the negative electrode active material within the above range, in some embodiments, the volume particle size distribution Dv99 of the natural graphite may be from 30.0 µm-48.0µm, optionally may be from 32.0µm to 45.0µm.

In some embodiments, the particle size distribution (Dᵥ90-Dᵥ10)/Dᵥ50 of the negative active material may be from 1.10 to 1.30, and optionally may be from 1.10 to 1.25. When the positive active material includes one or more of the olivine-structured lithium-containing phosphates and the doping-modified and/or coating-modified compounds thereof, S falls within the provided range, and simultaneously the particle size distribution of the negative active material (Dᵥ90-Dᵥ10)/Dᵥ50 is adjusted to fall within the provided range, the dynamic performance and cycle performance at high temperature of the battery may be further improved. In order to make the particle size distribution (Dᵥ90-Dᵥ10)/Dᵥ50 of the negative active material fall within the above range, in some embodiments, the particle size distribution (Dᵥ90-Dᵥ10)/Dᵥ50 of the artificial graphite may be from 1.25 to 1.65, and optionally may be from 1.35 to 1.45 .

In order to make the particle size distribution (Dᵥ90-Dᵥ10)/Dᵥ50 of the negative active material fall within the above range, in some embodiments, the particle size distribution (Dᵥ90-Dᵥ10)/Dᵥ50 of natural graphite may be from 0.90 to 1.30, for example may be from 1.05 to 1.25 .

In some embodiments, the number percentage of the secondary particles in the artificial graphite is from 50% to 80%, and optionally from 60% to 75%. When the positive active material comprises one or more of the olivine-structured lithium-containing phosphates and the doping-modified and/or coating-modified compounds, S falls within the given range, and simultaneously the number percentage of the secondary particles in the artificial graphite falls within an appropriate range, the orientation of the plate after cold pressing may be further improved. This facilitates the intercalation into and de-intercalation of lithium ions, thereby improving the dynamic performance of the secondary battery; meanwhile, this also facilitates the expansion force during the cycle, thereby further improving the manufacturing process (for example, slurry stirring and filtering) of the negative active material.

In some embodiments, the tap density of the negative active material may satisfies <1.10 g/cm³, and optionally may be from 1.00 g/cm³ to 1.09 g/cm³. When the positive active material comprises one or more of the olivine-structured lithium-containing phosphates and the doping- and/or coating modified compounds thereof, S falls within the provided range, and simultaneously the tap density of the negative active material is adjusted to fall within the provided range, the cycle performance at high temperature of the battery may be further improved.

In order to make the tap density of the negative active material fall within the above range, in some embodiments, the tap density of the artificial graphite may be from 0.90g/cm³ to 1.18g/cm³, optionally may be from 0.95g/cm³ to 1.15g/cm³.

In order to make the tap density of the negative active material fall within the above range, in some embodiments, the tap density of natural graphite may be from 0.90g/cm³ to 1.20g/cm³, optionally may be from 0.95g/cm³ to 1.15g/cm³.

In some embodiments, the graphitization degree of the negative active material may be from 92% to 95%, and optionally may be from 93% to 94%. When the positive active material includes one or more of the olivine-structured lithium-containing phosphates and the doping- modified and/or coating-modified compounds, S falls within the provided range, and the graphitization degree of the negative active material is adjusted to fall within the provided range, the secondary battery may have higher energy density and at the same time better cycle performance at high temperature.

In order to make the graphitization degree of the negative active material fall within the above range, in some embodiments, the graphitization degree of the artificial graphite may be from 90% to 95%, and optionally may be from 91% to 93%.

In order to make the graphitization degree of the negative active material fall within the above range, in some embodiments, the graphitization degree of natural graphite may be from 95% to 98%, more optionally may be from 96% to 97%.

In some embodiments, there is no a coating layer on the surface of the artificial graphite.

In some embodiments, there is a carbon coating layer on the surface of natural graphite.

In some embodiments, the mass percentage of the natural graphite in the negative active material may be ≥30%, optionally may be from 30% to 50%, and from 35% to 50%. When the positive active material includes one or more of the olivine-structured lithium-containing phosphates and the doping-modified and/or coating-modified compounds thereof, S falls within the provided range, and simultaneously the mass percentage of the natural graphite in the negative active material is adjusted to fall within the provided range, the battery may have higher energy density and at the same time better dynamic performance.

In some embodiments, when the positive active material comprises one or more of the olivine-structured lithium-containing phosphates and the doping-modified and/or coating-modified compounds thereof, and S falls within the provided range, the negative electrode film may have a compaction density of 1.5g/cm³ to 1.7g/cm³, more optionally of 1.55g/cm³ to 1.6g/cm³. When the positive active material comprises one or more of the olivine-structured lithium-containing phosphates and doping-modified and/or coating-modified compounds thereof, by adjusting the compaction density of the negative electrode film to fall within the above range, it would be helpful for the number percentage S of the secondary particles in the negative active material falling within the provided range, thereby further improving the cycle life at high temperature of the battery.

In some embodiments, when the positive electrode active material comprises one or more of the olivine-structured lithium-containing phosphates and doping-modified and/or coating-modified compounds thereof, and S falls within the provided range, the negative electrode film may have an areal density of 7mg/cm² to 10mg/cm², optionally of 7mg/cm² to 8mg/cm². By adjusting the compaction density of the negative electrode film falling within the above range, the battery can have a higher energy density, and the battery may have higher active ions and electrons transportation performance, further the dynamic performance of the battery is improved and polarization and side reactions are reduced. As a result, the cycle performance at high temperature of the battery is further improved.

In some embodiments, when the positive electrode active material comprises one or more of olivine-structured lithium-containing phosphates and doping-modified and/or coating-modified compounds thereof, and S falls within a provided range, the cohesion force F of the negative electrode film satisfies: 150N/m≤F≤250N/m, optionally 180N/m≤F≤220N/m. By adjusting the cohesion force of the negative electrode film to fall within the above range, it protects the structure of the negative active material from being damaged, and as well makes the negative electrode film have a porosity that can make the electrolyte quickly infiltrate, and especially makes the negative electrode film have higher performance of transporting active ions and electrons. In addition, the battery cycle expansion force may be reduced, and thus the cycle performance and dynamic performance of the battery may be further improved. Further, the amount of binder added in the negative electrode film may be reduced.

When the positive active material comprises one or more of the olivine-structured lithium-containing phosphates and the doping-modified and/or coating-modified compounds thereof, the negative active material may be prepared by the preparation method as described above, and adjusted for its parameters to satisfy the required range with methods well-known in the art, so as to further improve the performance of the battery wherein the positive active material comprises olivine-structured lithium-containing phosphates and the doping-modified and/or coating-modified compounds thereof.

In some embodiments, the positive film may also optionally include a binder. The type of binder is not specifically restricted, and can be selected by those skilled in the art according to actual requirements. As an example, the binder used for the positive film may include one or more of polyvinylidene fluoride (PVDF) and polytetrafluoroethylene (PTFE).

In some embodiments, the positive film may also optionally include a conductive agent. The type of conductive agent is not specifically restricted, and can be selected by those skilled in the art according to actual requirements. As an example, the conductive agent used for the positive film may include one or more of graphite, superconducting carbon, acetylene black, carbon black, Ketjen black, carbon dots, carbon nanotubes, graphene, and carbon nanofibers.

### [Electrolyte]

The electrolyte serves as conducting ions between the positive and negative plates. The type of electrolyte is not specifically restricted in the present application, and can be selected by those skilled in the art according to actual requirements. For example, the electrolyte may be at least one selected from solid electrolyte and liquid electrolyte (i.e., electrolyte solution).

In some embodiments, an electrolyte solution is used as the electrolyte. The electrolyte includes an electrolyte salt and a solvent. In some embodiments, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane sulfonimide) (LiTFSI), lithium trifluoromethane sulfonate (LiTFS), lithium difluorooxalate borate (LiDFOB), lithium dioxalate borate (LiBOB), lithium difluorophosphate (LiPO₂F₂), lithium difluorodioxalate phosphate (LiDFOP) and lithium tetrafluorooxalate phosphate (LiTFOP).

In some embodiments, the solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte solution may also optionally include additives. For example, the additives may include negative electrode film-forming additives, and may include positive film-forming additives, and yet may include additives that can improve certain performances of battery, for example, additives that improve battery overcharge performance, additives that improve performance at high temperature of battery, and additives that improve low-temperature performance of battery.

### [Separator]

The secondary batteries using an electrolyte solution and some using a solid electrolyte may further include separators. The separators are arranged between the positive plate and the negative plate, serving as isolation. The type of separators are not specifically restricted in this application, and can be selected as any well-known porous separators having good chemical stability and mechanical stability. In some embodiments, the material for the separators may be one or more selected from glass fiber, non-woven fabric, polyethylene, polypropylene, and polyvinylidene fluoride. The separators may be a single-layer film or a multilayer composite film. When the separator is a multilayer composite film, the materials of each layer may be the same or different.

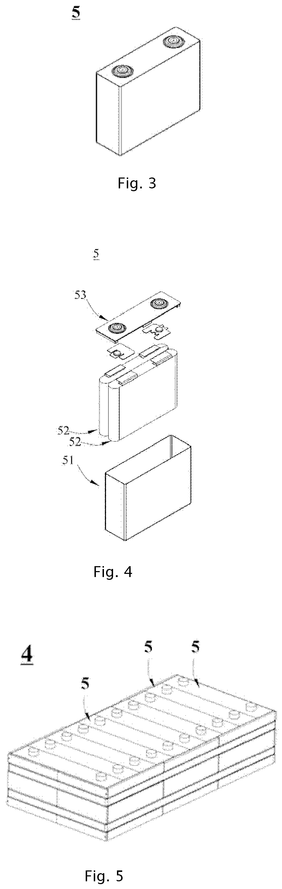

The shape of the secondary battery is not specifically restricted in the present application, and it may be cylindrical, square or other arbitrary shapes. Figure 3 shows an exemplary secondary battery 5 having a square structure.

In some embodiments, the secondary battery may include an outer package. The outer packaging is used for encapsulating the positive plate, the negative plate and the electrolyte.

In some embodiments, referring to Figure 4, the outer package may include a housing 51 and a cover 53, wherein the housing 51 may include a bottom board and a side board connected to the bottom board, and the bottom board and the side board are enclosed to form a receiving cavity. The housing 51 has an opening communicating with the receiving cavity; and the cover board 53 may cover the opening to close the receiving cavity.

The positive plate, the negative plate and the separator may, via a winding process or a lamination process, form an electrode assembly 52. The electrode assembly 52 is encapsulated in the receiving cavity. The electrolyte may be selected as electrolyte solution, which is disposed in the electrode assembly 52 for soaking. The number of electrode assemblies 52 included in the secondary battery 5 may be one or several which can be adjusted according to requirements.

In some embodiments, the outer package of the secondary battery may be a hard housing, such as a hard plastic housing, aluminum housing, steel housing, or the like. The outer package of the secondary battery may also be a soft bag, such as a pouch-type soft bag. The material of the soft bag may be plastic, for example, may include one or more of polypropylene (PP), polybutylene terephthalate (PBT), polybutylene succinate (PBS), and the like.

In some embodiments, the secondary battery may be assembled into a battery module, the number of secondary batteries contained in the battery module may be multiple, and the specific number nay be adjusted according to the application and capacity of the battery module.

Figure 5 is an exemplary battery module 4. Referring to Figure 5, in the battery module 4, multiple secondary batteries 5 may be arranged in sequence along the length direction of the battery module 4. Of course, they can also be arranged in other arbitrary manners. Furthermore, the multiple secondary batteries 5 may be fixed via fasteners.

Optionally, battery module 4 may further include a housing having a receiving space, and multiple secondary batteries 5 are received in the receiving space.

In some embodiments, the above-mentioned battery modules may also be assembled into a battery pack, and the number of battery modules included in the battery pack may be adjusted according to the application and capacity of the battery pack.

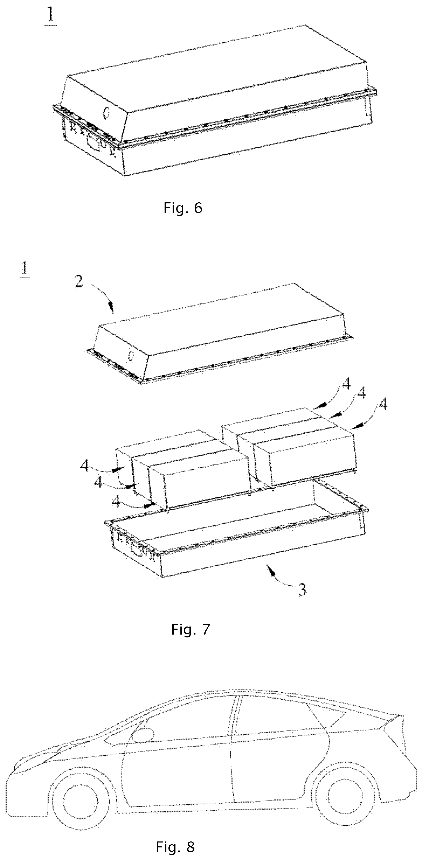

Figures 6 and 7 show an exemplary battery pack 1. Referring to Figures 6 and 7, the battery pack 1 may include a battery case and multiple battery modules 4 arranged in the battery case. The battery case includes an upper case body 2 and a lower case body 3. The upper case body 2 may cover the lower case body 3 to form a closed space for receiving the battery module 4. The multiple battery modules 4 may be arranged in the battery case in arbitrary manners.

### Apparatus

The present application further provides an apparatus including the secondary battery obtained by the process of the first aspect of the present application. The secondary battery may be used as a power source of the apparatus, or may be used as an energy storage unit of the apparatus. The apparatus may be, but is not limited to, mobile devices (such as mobile phones, laptops), electric vehicles (such as pure electric vehicles, hybrid electric vehicles, plug-in hybrid electric vehicles, electric bicycles, electric scooters, electric golf carts, electric trucks), electric trains, ships and satellites, energy storage systems, etc.

The apparatus, according to the application requirements, may include a secondary battery, a battery module, or a battery pack.

Fig. 8 is an exemplary apparatus. The apparatus is a pure electric vehicle, a hybrid electric vehicle, or a plug-in hybrid electric vehicle. In order to meet the requirements of the apparatus for high power and high energy density of the secondary battery, a battery pack or a battery module may be used.

As another example, the apparatus may be a mobile phone, a tablet computer, a laptop, and the like. The apparatus is generally required to be thin and light, and thus a secondary battery may be used as a power source.

### EXAMPLES

The following examples illustrate the contents disclosed in the present application more concretely, but these examples are only for explanatory description, since various modifications and changes within the scope of the present disclosure are apparent to those skilled in the art. Unless otherwise stated, all the parts, percentages and ratios reported in the following examples are based on weight; all the reagents used in the examples are commercially available or synthesized according to conventional methods, and these reagents can be used directly, without further processing; and the instruments used in the examples are all commercially available.

### Example 1

### Preparation of positive plate

The positive active material LiNi_{0.8}Co_{0.1}Mn_{0.1}O₂ (NCM811), the conductive agent Super P, and the binder PVDF, at a weight ratio of 96.5:1.5:2, were fully stirred to mix in an appropriate amount of NMP, so as to form a uniform positive slurry. The surface of the positive current collector aluminum foil was coated with the positive slurry, and after drying and cold pressing, the positive plate was obtained. The positive film had an areal density of 17.8 mg/cm² and a compaction density of 3.4 g/cm³.

### Preparation of negative plate

The negative electrode active material (see the table below for details), the conductive agent Super P, the binder SBR, and the thickener CMC-Na were mixed at a weight ratio of 96.2:0.8:1.8:1.2, and were stirred thoroughly in an appropriate amount of deionized water, so as to form a uniform negative slurry. The negative slurry was coated on the surface of the negative current collector copper foil, and after drying and cold pressing, a negative plate was obtained. The negative active material was a mixed material of the first material and the second material, with the first material being the artificial graphite and the second material being the natural graphite, wherein a mass percentage of W of the natural graphite in the negative active material was 30%, and wherein the artificial graphite included primary particles and secondary particles in which the natural graphite constituted all the primary particles, and the secondary particles was present in the negative active material in a number percentage S of 10%. The film had an areal density of 11.5 mg/cm², and the negative plate had a compaction density of 3.4 g/cm³.

### Separator

PP/PE composite separator was used.

### Preparation of electrolyte

Ethylene carbonate (EC), ethyl methyl carbonate (EMC), and diethyl carbonate (DEC) were mixed in a volume ratio of 1:1:1, and then LiPF₆ was uniformly dissolved in the above solution, thereby obtaining the electrolyte. In the electrolyte, LiPF₆ had a concentration of 1 mol/L.

### Preparation of secondary battery

The above positive plate, separator, and negative plate were stacked in sequence and were wound, thereby obtaining an electrode assembly. The electrode assembly was placed into an outer package and was filled with the electrolyte prepared as above, and after being subjected to the processes of encapsulation, standing, formation and aging, a secondary battery was obtained.

### Examples 2∼7 and 15~27 and Comparative examples 1~2

The preparation was the same to example 1, except that the relevant parameters for preparing the negative plate were adjusted, see tables 1 and 3 for details.

### Example 8

### Preparation of positive plate

The positive active material lithium iron phosphate (LFP), the conductive agent Super P, and the binder PVDF, at a weight ratio of 96.5:1.5:2, were fully stirred to mix in an appropriate amount of NMP, so as to form a uniform positive slurry. The surface of the positive current collector aluminum foil was coated with the positive slurry, and after drying and cold pressing, the positive plate was obtained. The positive film had an areal density of 18.1 mg/cm² and a compaction density of 2.45 g/cm³.

### Preparation of negative plate

The negative electrode active material (see the table below for details), the conductive agent Super P, the binder SBR, and the thickener CMC-Na were mixed at a weight ratio of 96.2:0.8:1.8:1.2, and were stirred thoroughly in an appropriate amount of deionized water, so as to form uniform negative slurry. The surface of the negative current collector copper foil was coated with the negative slurry, and after drying and cold pressing, a negative plate was obtained. The negative active material was a mixed material of the first material and the second material, with the first material being the artificial graphite and the second material being the natural graphite, wherein the natural graphite was present in the negative active material in a mass percentage of W = 75%, and wherein the artificial graphite included primary particles and secondary particles in which the natural graphite constituted all the primary particles, and the secondary particles was present in the negative active material in a number percentage S of 10%. The negative electrode film had an areal density of 8.5 mg/cm² and a compaction density of 1.60 g/cm³.

### Separator

PP/PE composite separator was used.

### Preparation of electrolyte

Ethylene carbonate (EC), ethyl methyl carbonate (EMC), and diethyl carbonate (DEC) were mixed in a volume ratio of 1:1:1, and then LiPF₆ was uniformly dissolved in the above solution, thereby obtaining the electrolyte. In the electrolyte, LiPF₆ had a concentration of 1 mol/L.

### Preparation of secondary battery

The above positive plate, separator, and negative plate were stacked in sequence and were wound, thereby obtaining an electrode assembly. The electrode assembly was placed into an outer package and was filled with the electrolyte prepared as above, and after being subjected to the processes of encapsulation, standing, formation and aging, a secondary battery was obtained.

### Examples 9~14 and 28~40 and Comparative examples 3~4

The preparation was the same to example 8, except that the relevant parameters for preparing the negative plate were adjusted, see tables 2 and 4 for details.

### Test

### 1) Dynamic performance test of battery

The battery of each of the examples or comparative examples was subjected to charge and discharge tests under an environment of 25°C. The constant-current discharging was conducted at a discharge current of 1.0C (i.e. the current value at which the theoretical capacity was completely discharged within 1 h) until the discharging cut-off voltage was reached (when the positive active material was lithium nickel cobalt manganese oxide, the discharging cut-off voltage was 2.8V, and when the positive active material was lithium iron phosphate, the discharging cut-off voltage was 2.5V). Afterwards, the constant-current charging was conducted at a charge current of 1.0C to the charging cut-off voltage (when the positive active material was lithium nickel cobalt manganese oxide, the charging cut-off voltage was 4.2V, and when the positive active material was lithium iron phosphate, the charging cut-off voltage was 3.65 V), followed by the constant-voltage charging to reach a current of 0.05C, at which point the battery was fully charged. The fully charged battery was allowed to stand for 5 minutes, then to constant-current discharge at a discharge current of 1.0C to the discharging cut-off voltage, at which point the discharge capacity was the actual capacity of the battery at 1.0C, denoted as C₀. Then the battery was constant-current charged at x C0 until reaching 80% SOC, allowing it to stand for 5 minutes. The battery was disassembled to observe lithium deposition at the interface. If lithium was not deposited on the surface of the negative electrode, the above test was repeated at increased charge rate, until lithium was deposited on the surface of the negative electrode. The maximum charge rate was recorded at which lithium did not deposit on the surface of the negative electrode, for characterizing the dynamic performance of the battery.

### 2) Cycle performance at high temperature of battery

Charging and discharging were conducted for the first time under an environment of 60°C. The constant-current and constant-voltage charging was conducted at a charge current of 1.0C (i.e. the current value at which the theoretical capacity was completely discharged within 1 h) until the charging cut-off voltage was reached (when the positive active material was lithium nickel cobalt manganese oxide, the charging cut-off voltage was 4.2V, and when the positive active material was lithium iron phosphate, the charging cut-off voltage was 3.65 V), then the constant-current discharging was conducted at a charge current of 1.0C until the discharging cut-off was reached voltage (when the positive active material was lithium nickel cobalt manganese oxide, the discharging cut-off voltage was 2.8V, and when the positive active material was lithium iron phosphate, the discharging cut-off voltage was 2.5V), and this constituents a charge and discharge cycle, at which point the resulting discharge capacity is the discharge capacity of the first cycle. Subsequently, continuous charging and discharging cycles were conducted, and the discharge capacity value of each cycle was recorded; the capacity retention ratio of each cycle was calculated according to a formula: capacity retention ratio of the N^{th} cycle = (discharge capacity of the N^{th} cycle/discharge capacity of the first cycle) × 100%. When the cycle capacity retention ratio dropped to 80%, the number of cycles of the battery was recorded.

### 3) Test of cyclic expansion rate of battery

The initial thickness of each negative plate of each example was measured, denoted as H0. Then, the battery was subjected to the charging and discharging test under an environment of 25°C. The constant-current discharging was conducted at a discharge current of 1.0C (i.e. the current value at which the theoretical capacity was completely discharged within 1 h) until the discharging cut-off voltage was reached. Afterwards, the constant-current charging was conducted at a charge current of 1.0C to the charging cut-off voltage, followed by the constant-voltage charging to a current of 0.05C, at which point the battery was fully charged, i.e. 100%SOC (State of Charge). The fully charged battery was allowed to stand for 5 minutes, then to constant-current discharge at a discharge current of 1.0C to the discharging cut-off voltage, at which point the discharge capacity was the actual capacity of the battery at 1.0C, denoted as C₀. At 45°C, the secondary battery was subjected to a 100% DOD (100% depth of discharge, that is, fully charged and then fully discharged) of 1C0/1C0 charge-discharge cycle on the Neware (Xinwei) charging - discharging machine. When the cycle number reached 300, the cycle was stopped. The secondary battery was charged to 100% SOC, then was disassembled to measure the thickness of the corresponding negative plate, denoted as H1. The cyclic expansion ratio of the negative plate, after the battery was cycled under 1C0/1C0 for 300 cycles at 45°C, was: (H1/H0-1) ×100%.

**Table 1**

| No. | Positive active material | Negative active material | | | | | | | Performance test of battery | |
|---|---|---|---|---|---|---|---|---|---|---|
| | | Mass percentage of artificial graphite A in the negative active material | Mass percentage of artificial graphite B in the negative active material | Mass percentage of natural graphite in the negative active material | Dv50 of artificial graphite after being mixed (µm) | Dv50 of natural graphite (µm) | Dv50 of negative active material (µm) | S | Dynamic performance | Numbers of cycle at high temperature |
| Example 1 | NCM811 | 20% | 50% | 30% | 10.8 | 12.1 | 11.2 | 10% | 0.95C0 | 986 |
| Example 2 | NCM811 | 30% | 45% | 25% | 13.0 | 12.1 | 12.8 | 20% | 1.08C0 | 974 |
| Example 3 | NCM811 | 40% | 40% | 20% | 13.4 | 12.1 | 13.1 | 25% | 1.15C0 | 990 |
| Example 4 | NCM811 | 55% | 25% | 20% | 13.9 | 12.1 | 13.5 | 30% | 1.18C0 | 976 |
| Example 5 | NCM811 | 60% | 20% | 20% | 14.2 | 12.1 | 13.9 | 50% | 1.21C0 | 822 |
| Example 7 | NCM811 | 40% | 10% | 50% | 14.1 | 12.1 | 13.1 | 25% | 1.11C0 | 674 |
| Comparative example 1 | NCM811 | 10% | 70% | 20% | 14.2 | 12.1 | 13.8 | 5% | 0.60C0 | 805 |
| Comparative example 2 | NCM811 | 90% | 5% | 5% | 14.1 | 12.1 | 14.0 | 60% | 1.25C0 | 503 |

As shown in Table 1, by the comparison of Examples 1-7 and Comparative Examples 1-2, it can be seen that the secondary battery of the examples according to the present application adopted the positive active material comprising lithium transition metal oxide and the negative active material comprising artificial graphite and natural graphite, wherein the artificial graphite included primary particles and secondary particles, and wherein the secondary particles was present in the negative active material in a number percentage S in a specific range. As a result, the secondary battery had good high-temperature cycle performance together with good dynamic performance.

In addition, by the comparison of Example 3 and Example 7, it can be seen that, in the case that the number percentage of the natural graphite in the negative active material met specific range, the side reactions during the battery cycle were significantly reduced, thereby further increasing the number of cycles of the battery at high temperature.

**Table 2**

| No. | Positive active material | Negative active material | | | | | | | Performance test of battery | |
|---|---|---|---|---|---|---|---|---|---|---|
| | | Mass percentage of artificial graphite A in the negative active material | Mass percentage of artificial graphite B in the negative active material | Mass percentage of natural graphite in the negative active material | Dv50 of artificial graphite after being mixed (µm) | Dv50 of natural graphite (µm) | Dv50 of negative active material (µm) | S | Dynamic performance | Numbers of cycle at high temperature |
| Example 8 | LFP | 10% | 15% | 75% | 10.8 | 16.8 | 15.3 | 10% | 1.45C0 | 1318 |
| Example 9 | LFP | 25% | 10% | 65% | 14.2 | 16.8 | 15.9 | 17% | 1.56C0 | 1306 |
| Example 10 | LFP | 35% | 5% | 60% | 15.8 | 16.8 | 16.4 | 23% | 1.62C0 | 1234 |
| Example 11 | LFP | 45% | 5% | 50% | 16.6 | 16.8 | 16.7 | 34% | 1.65C0 | 1358 |
| Example 12 | LFP | 55% | 5% | 40% | 18.0 | 16.8 | 17.5 | 42% | 1.76C0 | 1103 |
| Example 13 | LFP | 60% | 5% | 35% | 18.6 | 16.8 | 18.0 | 50% | 1.85C0 | 923 |
| Example 14 | LFP | 35% | 45% | 20% | 16.4 | 16.8 | 16.5 | 32% | 1.36C0 | 1406 |
| Comparative example 3 | LFP | 8% | 32% | 60% | 13.8 | 16.8 | 16.1 | 5% | 0.92C0 | 756 |
| Comparative example 4 | LFP | 80 | 10% | 10 | 15.2 | 16.8 | 15.4 | 60% | 1.65C0 | 821 |

As shown in Table 2, by the comparison of Examples 8-14 and Comparative Examples 3-4, it can be seen that the secondary battery of the examples according to the present application adopted a positive active material comprising lithium phosphate with an olivine structure and a negative active material comprising artificial graphite and natural graphite, wherein the artificial graphite included primary particles and secondary particles, and wherein the secondary particles was present in the negative active material in a number percentage S in a specific range. As a result, the secondary battery had good high-temperature cycle performance together with good dynamic performance.

In addition, by the comparison of Example 14 and Example 11, it can be seen that, in the case that the number percentage of the natural graphite in the negative active material meets specific range, the secondary battery had high energy density together with good dynamic performance.

**Table 3**

| No. | Positive active material | Negative active material | | | | | | | | | | | | |
|---|---|---|---|---|---|---|---|---|---|---|---|---|---|---|
| | | Mass percentage of artificial graphite A in negative active material | Dv50 of artificial graphite A (µm) | Mass percentage of artificial graphite B in negative active material | Dv50 of artificial graphite B (µm) | Dv50 of artificial graphite after being mixed (µm) | Mass percentage of natural graphite in the negative active material | Dv50 of natural graphite (µm) | Dv50 of negative active material (µm) | Dv90 of negative active material (µm) | Dv99 of negative active material (µm) | Particle size distribution | S | Cyclic expansion ratio |
| Example 15 | NCM811 | 55% | 9.4 | 25% | 5.4 | 8.3 | 20% | 7.1 | 8.0 | 16.5 | 25.1 | 1.30 | 22% | 36.4% |
| Example 16 | NCM811 | 55% | 11.6 | 25% | 6.7 | 10.3 | 20% | 7.1 | 9.7 | 17.1 | 27.3 | 1.31 | 23% | 35.1% |
| Example 17 | NCM811 | 55% | 12.7 | 25% | 7.8 | 11.4 | 20% | 8.7 | 10.9 | 18.1 | 28.4 | 1.33 | 24% | 33.7% |
| Example 18 | NCM811 | 55% | 13.8 | 25% | 8.1 | 12.3 | 20% | 11.2 | 12.1 | 20.4 | 30.3 | 1.36 | 23% | 32.4% |
| Example 19 | NCM811 | 55% | 14.9 | 25% | 8.6 | 13.2 | 20% | 12.4 | 13.0 | 21.2 | 33.1 | 1.41 | 27% | 31.8% |
| Example 4 | NCM811 | 55% | 15.6 | 25% | 9.1 | 13.9 | 20% | 12.1 | 13.5 | 22.6 | 35.6 | 1.30 | 33% | 31.2% |
| Example 20 | NCM811 | 55% | 16.1 | 25% | 9.4 | 14.3 | 20% | 12.8 | 14.0 | 23.3 | 36.2 | 1.42 | 28% | 31.0% |
| Example 21 | NCM811 | 55% | 18.2 | 25% | 10.8 | 16.2 | 20% | 10.2 | 15.0 | 24.6 | 37.0 | 1.48 | 30% | 37.9% |
| Example 22 | NCM811 | 55% | 15.6 | 25% | 9.1 | 13.9 | 20% | 12.1 | 13.5 | 28.6 | 35.6 | 1.30 | 31% | 32.7% |
| Example 23 | NCM811 | 55% | 9.4 | 25% | 5.4 | 8.3 | 20% | 7.1 | 8.0 | 13.5 | 25.1 | 1.30 | 24% | 37.8% |
| Example 24 | NCM811 | 55% | 15.6 | 25% | 9.1 | 13.9 | 20% | 12.1 | 13.5 | 22.6 | 41.3 | 1.30 | 31% | 32.5% |
| Example 25 | NCM811 | 55% | 9.4 | 25% | 5.4 | 8.3 | 20% | 7.1 | 8.0 | 16.5 | 22.1 | 1.30 | 23% | 37.1% |
| Example 26 | NCM811 | 55% | 9.4 | 25% | 5.4 | 8.3 | 20% | 7.1 | 8.0 | 16.1 | 25.1 | 1.22 | 21% | 36.9% |
| Example 27 | NCM811 | 55% | 15.6 | 25% | 9.1 | 13.9 | 20% | 12.1 | 13.5 | 24.6 | 36.6 | 1.63 | 34% | 34.2% |

As shown in Table 3, when the secondary battery of the examples according to the present application adopted the positive active material comprising lithium transition metal oxide and the negative active material comprising artificial graphite and natural graphite, wherein the artificial graphite included primary particles and secondary particles, and wherein the secondary particles was present in the negative active material in a number percentage S in the specific range, and when Dᵥ50 of the negative active material fell within the range given in the present application, the cyclic expansion rate of the plate was improved, thereby further improving the safety of the battery. In addition, the above-mentioned cycle expansion rate was merely the thickness change rate of one single plate in the battery, while the battery was usually composed of multiple plates, which would result in a superimposing effect. Therefore, the improvement according to the present application was relatively significant in the battery field.

**Table 4**

| No. | Positive active material | Negative active material | | | | | | | | | | | | Evaluation of battery performance |
|---|---|---|---|---|---|---|---|---|---|---|---|---|---|---|
| | | Mass percentage of artificial graphite A in the negative active material | Dv50 of artifici al graphit eA (µm) | Mass percentage of artificial graphite B in the negative active material | Dv50 of artifici al graphit eB (µm) | Dv50 of artificial graphite after being mixed (µm) | Mass percentage of natural graphite in the negative active material | Dv50 of natural graphite (µm) | Dv50 of negative active material (µm) | Dv90 of negative active material (µm) | Dv99 of negative active material (µm) | Particle size distribution | S | Numbers of cycle at high temperature |
| Example 28 | LFP | 45% | 14.4 | 5% | 9.8 | 14.2 | 50% | 10.2 | 12.2 | 25.1 | 35.2 | 1.12 | 28% | 858 |
| Example 29 | LFP | 45% | 15.6 | 5% | 10.7 | 15.1 | 50% | 15.4 | 15.3 | 26.7 | 36.2 | 1.23 | 32% | 923 |
| Example 30 | LFP | 45% | 15.8 | 5% | 10.2 | 15.7 | 50% | 16.5 | 15.8 | 28.1 | 36.7 | 1.21 | 31% | 1308 |
| Example 11 | LFP | 45% | 16.8 | 5% | 11.6 | 16.6 | 50% | 16.8 | 16.7 | 29.5 | 37.3 | 1.20 | 34% | 1358 |
| Example 31 | LFP | 45% | 17.6 | 5% | 10.8 | 17.1 | 50% | 17.7 | 17.4 | 30.4 | 39.1 | 1.28 | 33% | 1251 |
| Example 32 | LFP | 45% | 18.6 | 5% | 11.3 | 17.9 | 50% | 17.9 | 17.9 | 31.2 | 40.6 | 1.26 | 35% | 1293 |
| Example 33 | LFP | 45% | 19.7 | 5% | 11.5 | 18.9 | 50% | 18.2 | 18.6 | 31.9 | 41.8 | 1.24 | 31% | 1311 |
| Example 34 | LFP | 45% | 20.4 | 5% | 11.2 | 19.6 | 50% | 18.5 | 19.0 | 32.0 | 42.0 | 1.30 | 35% | 1318 |
| Example 35 | LFP | 45% | 20.4 | 5% | 11.2 | 19.6 | 50% | 18.5 | 19.0 | 35.6 | 42.0 | 1.30 | 32% | 1308 |
| Example 36 | LFP | 45% | 14.4 | 5% | 9.8 | 14.2 | 50% | 10.2 | 12.2 | 23.1 | 35.2 | 1.12 | 30% | 828 |
| Example 37 | LFP | 45% | 20.4 | 5% | 11.2 | 19.6 | 50% | 18.5 | 19.0 | 32.0 | 50.0 | 1.30 | 35% | 1246 |
| Example 38 | LFP | 45% | 14.4 | 5% | 9.8 | 14.2 | 50% | 10.2 | 12.2 | 25.1 | 31.2 | 1.12 | 28% | 823 |
| Example 39 | LFP | 45% | 14.4 | 5% | 9.8 | 14.2 | 50% | 10.2 | 12.2 | 25.5 | 35.8 | 0.99 | 27% | 848 |
| Example 40 | LFP | 45% | 20.4 | 5% | 11.2 | 19.6 | 50% | 18.5 | 19.0 | 32.8 | 42.7 | 1.43 | 37% | 1118 |

As shown in Table 4, when the secondary battery of the examples according to the present application adopted a positive active material comprising lithium phosphate with an olivine structure and a negative active material comprising artificial graphite and natural graphite, wherein the artificial graphite included primary particles and secondary particles, and wherein the secondary particles was present in the negative active material in a number percentage S in a specific range, and when Dᵥ50 of the negative active material fallen within the range given in the present application, the cycle performance at high temperature of the battery was further improved.

## Claims

1. A process for preparing a secondary battery (5) including a positive plate, including a positive current collector and a positive film arranged on at least one surface of the positive current collector and including a positive active material, the positive active material comprising one or more of layered lithium transition metal oxides and the modified compounds thereof; and a negative plate, including a negative current collector and a negative electrode film arranged on at least one surface of the negative current collector and including a negative active material,
the process including preparing the negative active material by
(1) taking a non-needle-like petroleum coke as a raw material, smashing the raw material and removing fine powder; placing the raw material into a reacting kettle for heating, shaping, and removing fine powder, so as to obtain an intermediate product 1; graphitizing the intermediate product 1 at a high temperature, so as to obtain an intermediate product 2; and mixing intermediate product 2 in a mixer and then sieving, so as to obtain an artificial graphite A;
(2) taking a needle-like green petroleum coke as a raw material, smashing the raw material and removing fine powder; and graphitizing the raw material at high temperature and sieving, so as to obtain an artificial graphite B;
(3) mixing the artificial graphite A and the artificial graphite B to obtain an artificial graphite;
(4) taking flake graphite as a raw material, smashing and spheroidizing the raw material, so as to obtain an intermediate 1; chemically purifying the intermediate 1 to obtain an intermediate 2; drying the intermediate 2 and mixing it with pitch for carbonization treatment, and then sieving, so as to obtain a natural graphite; and
(5) mixing the artificial graphite and the natural graphite to obtain the negative active material,
wherein the negative active material comprises the artificial graphite and the natural graphite, and wherein the artificial graphite includes primary particles and secondary particles, and a number percentage S of the secondary particles in the negative active material satisfies: 10% ≤ S ≤ 50%.

2. The process according to claim 1, wherein 10% ≤ S ≤ 30%; and preferably 15% ≤ S ≤ 30%.

3. The process according to any one of claims 1 to 2, wherein
the negative active material has a volume average particle size Dᵥ50 of ≤14.0 µm;
optionally, the negative active material has a volume average particle size Dᵥ50 of from 8.0 µm to12.0 µm; and
optionally, the negative active material has a volume average particle size Dᵥ50 of from 12.0 µm to14.0 µm.

4. The process according to any one of claims 1 to 3, wherein the artificial graphite has a volume average particle size Dᵥ50 of from 10.0 µm to 14.5 µm, and optionally from 11.0 µm to 13.5 µm; and/or,
the natural graphite has a volume average particle size Dv50 of 7.0 µm to 14.0 µm, and optionally from 7.0 µm to 13.0 µm.

5. The process according to any one of claims 1 to 4, wherein the negative active material has a volume particle size distribution Dᵥ90 of from 16.0 µm to 25.0 µm, and optionally from 20.0 µm to 25.0 µm; and/or
the artificial graphite has a volume particle size distribution Dᵥ90 of from 23.0 µm to 30.0 µm, and optionally from 25.0 µm to 29.0 µm; and/or
the natural graphite has a volume particle size distribution Dᵥ90 of from 15.0 µm to 23.0 µm, and optionally of from 18.0 µm to 21.0 µm.

6. The process according to any one of claims 1 to 5, wherein the negative active material has a volume particle size distribution Dᵥ99 of from 25.0 µm to 37.0 µm, and optionally of from 33.0 µm to 36.5 µm; and/or
the artificial graphite has a volume particle size distribution Dᵥ99 of from 30.0 µm to 45.0 µm, and optionally of from 32.0 µm to 43.0 µm; and/or, the natural graphite has a volume particle size distribution Dᵥ99 of from 21.0 µm to 35.0 µm, and optionally of from 25.0 µm to 30.0 µm.

7. The process according to any of claims 1 to 6, wherein the negative active material has a particle size distribution (Dᵥ90 to Dᵥ10) / Dᵥ50 of from 1.30 to 1.55, and optionally from 1.35 to 1.50; and/or
the artificial graphite has a particle size distribution (Dᵥ90 to Dᵥ10) / Dᵥ50 of from 1.25 to 1.95, and optionally of from 1.35 to 1.80; and/or, the natural graphite has a particle size distribution (Dᵥ90 to Dᵥ10) / Dᵥ50 of from 0.88 to 1.28, and optionally from 0.98 to 1.18.

8. The process according to any one of claims 1 to 7, wherein the number percentage of the secondary particles in the artificial graphite is from 25% to 60%, and optionally from 30% to 50%.

9. The process according to any one of claims 1 to 8, wherein the negative active material has a tap density of ≥1.10 g/cm³, and optionally from 1.10 g/cm³ to 1.15 g/cm³; and/or
the artificial graphite has a tap density of from 0.90 g/cm³ to 1.20 g/cm³, and optionally from 1.05 g/cm³ to 1.15 g/cm³, and/or the natural graphite has a tap density of from 0.90 g/cm³ to 1.18 g/cm³, and optionally from 0.93 g/cm³ to 1.13 g/cm³.

10. The process according to any one of claims 1 to 9, wherein the negative active material has a graphitization degree of from 92% to 96%, and optionally from 93% to 95%; and/or .
the artificial graphite has a graphitization degree of from 90% to 95%, and optionally from 93% to 95%; and/or, the natural graphite has a graphitization degree of from 95% to 98%, and optionally from 95% to 97%.

11. The process according to any one of claims 1 to 10, wherein the natural graphite has a coating layer on the surface thereof.

12. The process according to any one of claims 1 to 11, wherein a mass percentage of the natural graphite in the negative active material is ≤30% and optionally from 15% to 25%.

13. The process according to any one of claims 1 to 12, wherein the negative electrode film has a compaction density of 1.60 g/cm³ to 1.80 g/cm³, and optionally of 1.65 g/cm³ to 1.75 g/cm³; and/or
the negative electrode film has an areal density of 10.0 mg/cm² to 13.0 mg/cm², and optionally of 10.5 mg/cm² to 11.5 mg/cm²; and/or
the negative electrode film has a cohesion force F satisfying: 220 N/m ≤ F ≤ 300 N/m, and optionally satisfying: 240 N/m ≤ F ≤ 260 N/m.

14. The process according to any one of claims 1 to 13, wherein the positive active material comprises a layered lithium transition metal oxide having a general formula of LiₐNi_{b}Co_{c}M_{d}M'ₑO_{f}A_{g}, wherein 0.8≤a≤1.2, 0.6≤ b<1, 0<c<1, 0<d<1, 0≤e≤0.1, 1≤f≤2, 0≤g≤1; M is one or more selected from the group consisting of Mn and Al; M' is one or more selected from Zr, Mn, Al, Zn, Cu, Cr, Mg, Fe, V, Ti and B; and A is one or more selected from N, F, S and Cl; and
optionally, 0.65≤b≤1.

## Patentansprüche

1. Ein Verfahren zur Herstellung einer Sekundärbatterie (5), die Sekundärbatterie umfassend eine positive Platte, aufweisend eines positiven Stromkollektors und eines positiven Films, der auf mindestens einer Oberfläche des positiven Stromkollektors angeordnet ist und ein positives Aktivmaterial enthält, wobei das positive Aktivmaterial eines oder mehrere geschichtete Lithium- Übergangsmetalloxide und deren modifizierte Verbindungen umfasst; und eine negative Platte, aufweisend eines negativen Stromkollektors und eines negativen Elektrodenfilms, der auf mindestens einer Oberfläche des negativen Stromkollektors angeordnet ist und ein negatives Aktivmaterial enthält,
der Verfahren die Herstellung des negativen Aktivmaterials umfasst durch,
(1) Nehmen eines nicht nadelförmigen Petrolkokses als Rohmaterial, Zerkleinern des Rohmaterials und Entfernen von feinem Pulver; Einbringen des Rohmaterials in einen Reaktionskessel zum Erhitzen, Formen und Entfernen von feinem Pulver, um so ein Zwischenprodukt 1 zu erhalten; Graphitieren des Zwischenprodukts 1 bei hoher Temperatur, um ein Zwischenprodukt 2 zu erhalten; und Mischen des Zwischenprodukts 2 in einem Mischer und anschließendes Sieben, um einen künstlichen Graphit A zu erhalten;
(2) Nehmen eines nadelförmigen grünen Petrolkokses als Rohmaterial, Zerkleinern des Rohmaterials und Entfernen von feinem Pulver; und Graphitieren des Rohmaterials bei hoher Temperatur und Sieben, um einen künstlichen Graphit B zu erhalten;
(3) Mischen des künstlichen Graphits A und des künstlichen Graphits B, um einen künstlichen Graphit zu erhalten;
(4) Nehmen von Flockengraphit als Rohmaterial, Zerkleinern und Sphäroidisieren des Rohmaterials, um ein Zwischenprodukt 1 zu erhalten; chemisches Reinigen des Zwischenprodukts 1, um ein Zwischenprodukt 2 zu erhalten; Trocknen des Zwischenprodukts 2 und Mischen mit Pech zur Karbonisierungsbehandlung und anschließendes Sieben, um einen natürlichen Graphit zu erhalten; und
(5) Mischen des künstlichen Graphits und des natürlichen Graphits, um das negative Aktivmaterial zu erhalten, wobei das negative Aktivmaterial den künstlichen Graphit und den natürlichen Graphit umfasst und wobei der künstliche Graphit Primärpartikel und Sekundärpartikel umfasst und ein Zahlenprozentsatz S der Sekundärpartikel im negativ Aktivmaterial Folgendes erfüllt: 10% ≤ S ≤ 50%.

2. Verfahren nach Anspruch 1, wobei 10% ≤ S ≤ 30%; und vorzugsweise 15% ≤ S ≤ 30%.

3. Verfahren nach einem der Ansprüche 1 bis 2, wobei
das negative Aktivmaterial eine volumengemittelte Partikelgröße Dᵥ50 von ≤ 14,0 µm aufweist;
optional das negative Aktivmaterial eine volumengemittelte Partikelgröße Dᵥ50 von 8,0 µm bis 12,0 µm aufweist; und
optional das negative Aktivmaterial eine volumengemittelte Partikelgröße Dᵥ50 von 12,0 µm bis 14,0 µm aufweist.

4. Verfahren nach einem der Ansprüche 1 bis 3, wobei der künstliche Graphit eine volumengemittelte Partikelgröße Dᵥ50 von 10,0 µm bis 14,5 µm und optional von 11,0 µm bis 13,5 µm aufweist; und/oder,
der natürliche Graphit eine volumengemittelte Partikelgröße Dᵥ50 von 7,0 µm bis 14,0 µm und optional von 7,0 µm bis 13,0 µm aufweist.

5. Verfahren nach einem der Ansprüche 1 bis 4, wobei das negative Aktivmaterial eine Volumenpartikelgrößenverteilung Dᵥ90 von 16,0 µm bis 25,0 µm und optional von 20,0 µm bis 25,0 µm aufweist; und/oder
der künstliche Graphit eine Volumenpartikelgrößenverteilung Dᵥ90 von 23,0 µm bis 30,0 µm und optional von 25,0 µm bis 29,0 µm aufweist; und/oder
der natürliche Graphit eine Volumenpartikelgrößenverteilung Dᵥ90 von 15,0 µm bis 23,0 µm und optional von 18,0 µm bis 21,0 µm aufweist.

6. Verfahren nach einem der Ansprüche 1 bis 5, wobei das negative Aktivmaterial eine Volumenpartikelgrößenverteilung Dᵥ90 von 25,0 µm bis 37,0 µm und optional von 33,0 µm bis 36,5 µm aufweist; und/oder
der künstliche Graphit eine Volumenpartikelgrößenverteilung Dᵥ90 von 30,0 µm bis 45,0 µm und optional von 32,0 µm bis 43,0 µm aufweist; und/oder, der natürliche Graphit eine Volumenpartikelgrößenverteilung Dᵥ90 von 21,0 µm bis 35,0 µm und optional von 25,0 µm bis 30,0 µm aufweist.

7. Verfahren nach einem der Ansprüche 1 bis 6, wobei das negative Aktivmaterial eine Partikelgrößenverteilung (Dᵥ90 bis Dᵥ10) /Dᵥ50 von 1,30 bis 1,55 und optional von 1,35 bis 1,50 aufweist; und/oder
der künstliche Graphit eine Partikelgrößenverteilung (Dᵥ90 bis Dᵥ10) /Dᵥ50 von 1,25 bis 1,95 und optional von 1,35 bis 1,80 aufweist; und/oder, der Naturgraphit eine Partikelgrößenverteilung (Dᵥ90 bis Dᵥ10) /Dᵥ50 von 0,88 bis 1,28 und optional von 0,98 bis 1,18 aufweist.

8. Verfahren nach einem der Ansprüche 1 bis 7, wobei der Zahlenprozentsatz der Sekundärpartikel im künstlichen Graphit 25% bis 60% und optional 30% bis 50% beträgt.

9. Verfahren nach einem der Ansprüche 1 bis 8, wobei das negative Aktivmaterial eine Klopfdichte von ≥ 1,10 g/cm³ und optional von 1,10 g/cm³ bis 1,15 g/cm³ aufweist; und/oder
der künstliche Graphit eine Klopfdichte von 0,90 g/cm³ bis 1,20 g/cm³ und optional von 1,05 g/cm³ bis 1,15 g/cm³ aufweist und/oder der natürliche Graphit eine Klopfdichte von 0,90 g/cm³ bis 1,18 g/cm³ und optional von 0,93 g/cm³ bis 1,13 g/cm³ aufweist.

10. Verfahren nach einem der Ansprüche 1 bis 9, wobei das negative Aktivmaterial einen Graphitisierungsgrad von 92% bis 96% und optional von 93% bis 95% aufweist; und/oder,
der künstliche Graphit einen Graphitisierungsgrad von 90% bis 95% und optional von 93% bis 95% aufweist;
und/oder der natürliche Graphit einen Graphitisierungsgrad von 95% bis 98% und optional von 95% bis 97% aufweist.

11. Verfahren nach einem der Ansprüche 1 bis 10, wobei der natürliche Graphit eine Beschichtung auf seiner Oberfläche aufweist.

12. Verfahren nach einem der Ansprüche 1 bis 11, wobei ein Massenanteil des natürlichen Graphits im negative Aktivmaterial ≤ 30% und optional 15% bis 25% beträgt.

13. Verfahren nach einem der Ansprüche 1 bis 12, wobei der negative Elektrodenfilm eine Verdichtungsdichte von 1,60 g/cm³ bis 1,80 g/cm³ und optional von 1,65 g/cm³ bis 1,75 g/cm³ aufweist; und/oder
der negative Elektrodenfilm eine Flächendichte von 10,0 mg/cm² bis 13,0 mg/cm² und optional von 10,5 mg/cm² bis 11,5 mg/cm² aufweist; und/oder
der negative Elektrodenfilm eine Kohäsionskraft F aufweist, die Folgendes erfüllt: 220 N/m ≤ F ≤ 300 N/m und optional erfüllt: 240 N/m ≤ F ≤ 260 N/m.

14. Verfahren nach einem der Ansprüche 1 bis 13, wobei das positive Aktivmaterial ein geschichtetes Lithium-Übergangsmetalloxid mit der allgemeinen Formel LiaNibCocMdM'eOfAg umfasst, wobei 0,8 ≤ a ≤ 1,2, 0,6 ≤ b < 1, 0 < c < 1, 0 < d < 1, 0 ≤ e ≤ 0,1 , 1≤f≤2, 0≤g≤1; M eines oder mehrere aus der Gruppe bestehend aus Mn und Al ausgewählt ist; M' eines oder mehrere aus Zr, Mn, Al, Zn, Cu, Cr, Mg, Fe, V, Ti und B ausgewählt ist; und A eines oder mehrere ausgewählt aus N, F, S und Cl ausgewählt ist; und
optional 0,65 ≤ b < 1.

## Revendications

1. Procédé pour préparer une batterie secondaire (5) comprenant une plaque positive qui comprend un collecteur de courant positif et un film positif disposé sur au moins une surface du collecteur de courant positif et comprenant un matériau actif positif, le matériau actif positif comprenant un ou plusieurs parmi des oxydes de métal de transition de lithium stratifiés et leurs composés modifiés ; et une plaque négative qui comprend un collecteur de courant négatif et un film d'électrode négative disposé sur au moins une surface du collecteur de courant négatif et comprenant un matériau actif négatif,
le procédé comprenant la préparation du matériau actif négatif consistant à
(1) prendre comme matière première un coke de pétrole en forme de non-aiguille, briser la matière première et éliminer des poudres fines ; placer la matière première dans une cuve de réaction et réchauffer, former et éliminer des poudres fines pour obtenir un produit intermédiaire 1 ; graphitiser le produit intermédiaire 1 à une température élevée pour obtenir un produit intermédiaire 2 ; et mélanger le produit intermédiaire 2 dans un mélangeur, puis tamiser pour obtenir un graphite artificiel A ;
(2) prendre comme matière première un coke de pétrole vert en forme d'aiguille, briser la matière première et éliminer des poudres fines ; et graphitiser la matière première à une température élevée et tamiser pour obtenir un graphite artificiel B ;
(3) mélanger le graphite artificiel A et le graphite artificiel B pour obtenir un graphite artificiel ;
(4) prendre comme matière première un graphite en flocons, briser et mettre la matière première en forme sphérique pour obtenir un produit intermédiaire 1 ; purifier de manière chimique le produit intermédiaire 1 pour obtenir un produit intermédiaire 2 ; sécher le produit intermédiaire 2 et le mélanger avec du brai et effectuer un traitement de carbonisation, puis tamiser pour obtenir un graphite naturel ; et
(5) mélanger le graphite artificiel et le graphite naturel pour obtenir le matériau actif négatif, dans lequel le matériau actif négatif comprend le graphite artificiel et le graphite naturel, et dans lequel le graphite artificiel comprend des particules primaires et des particules secondaires, et un pourcentage en nombre S des particules secondaires dans le matériau actif négatif satisfait : 10% ≤ S ≤ 50%.

2. Procédé selon la revendication 1, dans lequel 10% ≤ S ≤ 30% ; et de préférence 15% ≤ S ≤ 30%.

3. Procédé selon l'une quelconque des revendications 1 à 2, dans lequel,
le matériau actif négatif présente une taille moyenne des particules en volume Dᵥ50 de ≤14,0 µm éventuellement, le matériau actif négatif présente une taille moyenne des particules en volume Dᵥ50 de 8,0 µm à 12,0 µm ; et
éventuellement, le matériau actif négatif présente une taille moyenne des particules en volume Dᵥ50 de 12,0 µm à 14,0 µm.

4. Procédé selon l'une quelconque des revendications 1 à 3, dans lequel le graphite artificiel présente une taille moyenne des particules en volume Dᵥ50 de 10,0 µm à 14,5 µm, et éventuellement de 11,0 µm à 13,5 µm ; et/ou,
le graphite naturel présente une taille moyenne des particules en volume Dᵥ50 de 7,0 µm à 14,0 µm, et éventuellement de 7,0 µm à 13,0 µm.

5. Procédé selon l'une quelconque des revendications 1 à 4, dans lequel le matériau actif négatif présente une distribution de taille des particules en volume Dᵥ90 de 16,0 µm à 25,0 µm, et éventuellement de 20,0 µm à 25,0 µm ; et/ou
le graphite artificiel présente une distribution de taille des particules en volume Dᵥ90 de 23,0 µm à 30.0 µm, et éventuellement de 25,0 µm à 29,0 µm ; et/ou
le graphite naturel présente une distribution de taille des particules en volume Dᵥ90 de 15,0 µm à 23.0 µm, et éventuellement de 18,0 µm à 21,0 µm.

6. Procédé selon l'une quelconque des revendications 1 à 5, dans lequel le matériau actif négatif présente une distribution de taille des particules en volume Dᵥ99 de 25,0 µm à 37,0 µm, et éventuellement de 33,0 µm à 36,5 µm ; et/ou
le graphite artificiel présente une distribution de taille des particules en volume Dᵥ99 de 30,0 µm à 45,0 µm, et éventuellement de 32,0 µm à 43,0 µm ; et/ou, le graphite naturel présente une distribution de taille des particules en volume Dᵥ99 de 21,0 µm à 35.0 µm, et éventuellement de 25,0 µm à 30,0 µm.

7. Procédé selon l'une quelconque des revendications 1 à 6, dans lequel le matériau actif négatif présente une distribution de taille des particules (Dᵥ90 à Dᵥ10) / Dᵥ50 de 1,30 à 1,55, et éventuellement de 1,35 à 1,50 ; et/ou
le graphite artificiel présente une distribution de taille des particules (Dᵥ90 à Dᵥ10) / Dᵥ50 de 1,25 à 1,95, et éventuellement de 1,35 à 1,80 ; et/ou, le graphite naturel présente une distribution de taille des particules (Dᵥ90 à Dᵥ10) / Dᵥ50 de 0,88 à 1,28, et éventuellement de 0,98 à 1,18.

8. Procédé selon l'une quelconque des revendications 1 à 7, dans lequel un pourcentage en nombre des particules secondaires dans le graphite artificiel est de 25% à 60%, et éventuellement de 30% à 50%.

9. Procédé selon l'une quelconque des revendications 1 à 8, dans lequel le matériau actif négatif présente une densité de tapotement ≥ 1,10 g/cm³, et éventuellement de 1,10 g/cm³ à 1,15 g/cm³ ; et/ou,
le graphite artificiel présente une densité de tapotement de 0,90 g/cm³ à 1,20 g/cm³, et éventuellement de 1,05 g/cm³ à 1,15 g/cm³, et/ou, le graphite naturel présente une densité de tapotement de 0,90 g/cm³ à 1,18 g/cm³, et éventuellement de 0,93 g/cm³ à 1,13 g/cm³.

10. Procédé selon l'une quelconque des revendications 1 à 9, dans lequel le matériau actif négatif présente un degré de graphitisation de 92% à 96%, et éventuellement de 93% à 95% ; et/ou,
le graphite artificiel présente un degré de graphitisation de 90% à 95%, et éventuellement de 93% à 95% ; et/ou, le graphite naturel présente un degré de graphitisation de 95% à 98%, et éventuellement de 95% à 97%.

11. Procédé selon l'une quelconque des revendications 1 à 10, dans lequel le graphite naturel présente une couche de revêtement à la surface de celui-ci.

12. Procédé selon l'une quelconque des revendications 1 à 11, dans lequel un pourcentage en masse du graphite naturel dans le matériau actif négatif est ≤30%, et éventuellement de 15% à 25%.

13. Procédé selon l'une quelconque des revendications 1 à 12, dans lequel le film d'électrode négative présente une densité tassée de 1,60 g/cm³ à 1,80 g/cm³, et éventuellement de 1,65 g/cm³ à 1,75 g/cm³ ; et/ou,
le film d'électrode négative présente une densité surfacique de 10,0 mg/cm² à 13,0 mg/cm², et éventuellement de 10,5 mg/cm² à 11,5 mg/cm² ; et/ou,
le film d'électrode négative présente une force de cohésion F satisfaisant : 220 N/m ≤ F ≤ 300 N/m, et éventuellement satisfaisant : 240 N/m ≤ F ≤ 260N/m.

14. Procédé selon l'une quelconque des revendications 1 à 13, dans lequel, le matériau actif positif comprend un oxyde de métal de transition de lithium stratifié ayant une formule générale de LiₐNi_{b}Co_{c}M_{d}M'ₑO_{f}A_{g}, où 0,8≤a≤1,2, 0,6≤b<1, 0<c<1, 0<d<1, 0≤e≤0,1, 1≤f≤2, 0≤g≤1 ; M est un ou plusieurs choisi parmi Mn et Al ; M' est un ou plusieurs choisi parmi Zr, Mn, Al, Zn, Cu, Cr, Mg, Fe, V, Ti et B, et A est un ou plusieurs choisis parmi N, F, S et Cl ; et
éventuellement, 0,65≤b<1.
